Europäisches Patentamt

European Patent Office

Office européen des brevets

(19)

(11) Veröffentlichungsnummer: **0 189 505**
**B1**

(12) **EUROPÄISCHE PATENTSCHRIFT**

(45) Veröffentlichungstag der Patentschrift: **20.06.90**

(51) Int. Cl.⁵: **B 60 C 27/14**

(21) Anmeldenummer: **85101563.6**

(22) Anmeldetag: **13.02.85**

(54) **Gleitschutzvorrichtung, insbesondere für luftbereifte Fahrzeugräder auf Schnee- und Eisflächen.**

(30) Priorität: **29.01.85 DE 8502229 u**
**07.02.85 DE 8503359 u**

(43) Veröffentlichungstag der Anmeldung:
**06.08.86 Patentblatt 86/32**

(45) Bekanntmachung des Hinweises auf die
Patenterteilung:
**20.06.90 Patentblatt 90/25**

(84) Benannte Vertragsstaaten:
**AT BE CH DE FR GB IT LI NL SE**

(56) Entgegenhaltungen:
**EP-A-0 056 130**
**DE-A-2 710 323**
**DE-A-2 741 662**
**FR-A-2 291 881**
**GB-A-2 086 318**

(73) Patentinhaber: **Confon AG**
**Langenhag 31**
**CH-9424 Rheineck (CH)**

(72) Erfinder: **Ippen, Heiko**
**Wilhelmshofallee 140**
**D-4150 Krefeld (DE)**

(74) Vertreter: **Richter, Werdermann & Gerbaulet**
**Neuer Wall 10**
**D-2000 Hamburg 36 (DE)**

Courier Press, Leamington Spa, England.

EP 0 189 505 B1

**Beschreibung**

Die Erfindung betrifft eine Gleitschutzvorrichtung, insbesondere für luftbereifte Fahrzeugräder auf Schnee und Eisflächen, die aus einer an der Radscheibe bzw. Felge befestigten Befestigungsscheibe und aus einer mit der Befestigungsscheibe lösbar verbundenen, mit einer mittigen Durchbrechung versehenen Tragscheibe mit einer Anzahl von mehreren, im gleichen Abstand voneinander radial verlaufenden Tragarmen aus einem vorgebogenen, die Reifenlauffläche übergreifenden Profil aus einem Kunststoff oder einem anderen geeigneten Werkstoff besteht.

Eine derartige Gleitschutzvorrichtung, insbesondere für luftbereifte Fahrzeugräder auf Schnee- und Eisflächen ist durch die EP—A—0 056 130 bekannt. Diese Gleitschutzvorrichtung dient als Gleitschutz und zur Erhöhung der Griffigkeit von Fahrzeugrädern auf Eis- und Schneeflächen. Außerdem läßt diese Gleitschutzvorrichtung ein Fahren mit höheren Geschwindigkeiten als beim Fahren mit Schneeketten bei gleichzeitiger Verbesserung des Bremsvermögens zu. Aufgrund der an den die Reifenlauffläche übergreifenden Tragarmen außenseitig angebrachten Spikes wird ein dem Spikereifen entsprechender Gleitschutz erhalten. Mit einer derartigen Gleitschutzvorrichtung werden aber nicht diejenigen vorteilhaften Eigenschaften erreicht, wie diese mit den an sich bekannten Schneeketten erhalten werden; insbesondere auf schneebedeckten Straße ist die Wirksamkeit dieser Gleitschutzvorrichtung nicht groß.

Durch die GB—A—2 086 318 ist eine Gleitschutzvorrichtung bekannt, die aus einem Kettenhalter in Form von zwei kreuzweise angeordneten Bügeln besteht, die an ihren Enden eine Schneekette tragen, wobei die Halterung an der Felge über elastische Gummielemente erfolgt, die an den Enden Haken tragen, die in die Felgendurchbrechungen eingreifen. Die beiden Bügel des Kettenhalters dieser Gleitschutzvorrichtung weisen die Reifenlauffläche übergreifende, abgebogene Endabschnitte auf, wobei die Schneekette ausschließlich an diesen abgebogenen Endabschnitten befestigt ist. Aus diesem Grunde liegt bei montierter Gleitschutzvorrichtung die Schneekette nur auf der Reifenlauffläche an und wird in diesem Bereich von den vier Kettenhaltern gehalten. Die Schneekette ist dabei nicht als Kettennetz ausgebildet und übergreift in keiner Weise den seitlichen Reifenwandbereich. Eine entsprechende Ausbildung der Schneekette hierfür ist auch nicht möglich, da die beiden Kettenhalter um ihren Mittelpunkt verschwenkbar und auf diese Weise die Gleitschutzvorrichtung auf kleinsten Raum zusammenlegbar ist. Aus diesem Grunde weist die Gleitschutzvorrichtung zwei kreuzweise angeordnete Bügel auf. Eine größere Anzahl von Bügeln ist wegen der Zusammenklappbarkeit nicht möglich. Außerdem ist diese Gleitschutzvorrichtung ähnlich den bekannten Schneeketten an Fahrzeugreifen montierbar, nämlich insofern, als das Fahrzeug in die am Boden liegende und auseinandergeklappte Gleitschutzvorrichtung so eingefahren wird, daß der Reifen auf dem Kettenabschnitt zwischen den Enden zweier Bügel zu liegen kommt und dann erst nach Aufrichten der Gleitschutzvorrichtung können die anderen Bügelenden die Reifenlauffläche übergreifen und die Schneekette zur Anlage auf die Reifenlauffläche bringen. Ein Aufsetzen der Gleitschutzvorrichtung auf den Fahrzeugreifen von außen ist nicht möglich, weil im Standbereich des Fahrzeugrades der Reifen von der Schneekette nicht untergriffen werden kann. Das Anbringen dieser Gleitschutzvorrichtung ist hiernach mühevoll.

Die Erfindung löst die Aufgabe, eine Gleitschutzvorrichtung der gattungsgemäßen Art zu schaffen, die nicht nur ein müheloses Anbringen und Abnehmen bei einem Fahrzeugreifen bei stehendem Fahrzeug ermöglicht und die sich den Walkbewegungen des Fahrzeugreifens anpaßt, sondern darüber hinaus auch die Wirksamkeit von Schneeketten aufweist, so daß die Fahreigenschaften des Fahrzeuges auf schneebedeckten Straßen verbessert und die Wirksamkeit der Gleitschutzvorrichtung auf schneebedeckten Straßen mit Steigungen oder Gefälle erhöht wird.

Diese Aufgabe wird durch die im Patentanspruch 1 gekennzeichneten Merkmale gelöst.

Eine derart ausgebildete Gleitschutzvorrichtung ist mühelos anlegbar und auch abnehmbar, da die Befestigungsscheibe an der Radscheibe bzw. Felge des Rades verbleibt und lediglich die Tragscheibe mit ihren das Kettennetz tragenden Tragarmen unter Verwendung einer entsprechend ausgestalteten Verriegelungseinrichtung an der Befestigungsscheibe befestigt wird. Damit ist eine Gleitschutzvorrichtung mit den Eigenschaften einer Schneekette geschaffen, die gegenüber dem oftmals mühevollen Anlegen und Abnehmen der bekannten Schneeketten in kürzester Zeit anlegbar ist, denn die Tragscheibe mit dem Kettennetz wird lediglich auf die am Rad vorgesehene Befestigungsscheibe aufgesetzt und mit dieser verriegelt, wobei die Tragarme mit dem Kettennetz die Reifenlauffläche übergreifen. Das Kettennetz der Gleitschutzvorrichtung braucht dabei nicht über die Schulter des Reifens von Hand gelegt zu werden, da beim Einführen der Tragarme über die Lauffläche des Reifens die Tragarme das Kettennetz mitnehmen, so daß nach dem Anlegen der Tragscheibe mit den Tragarmen und dem Kettennetz an der Befestigungsscheibe das Kettennetz oberhalb der Lauffläche des Fahrzeugreifens zu liegen kommt. Das von Hand Überziehen des Kettennetzes über die Schulter des Reifens bei den bekannten Schneeketten entfällt bei der Anwendung dieser Gleitschutzvorrichtung. Ebenfalls ist ein Spannen der Ketten oder des Kettennetzes der Schneekette der Gleitschutzvorrichtung nicht erforderlich, da nach dem Anlegen der Gleitschutzvorrichtung die Schneekette immer den richtigen Sitz an dem Reifen hat. Mittels der Tragarme der Gleitschutzvorrichtung wird das Kettennetz quasi schwebend über der Reifenlauffläche gehalten, so daß ein dichtes Anliegen der Schneekette an der Reifenlauffläche, wie dies der Fall bei über einen Reifen gespannten Schneeketten der Fall ist, vermieden wird, ohne daß dabei der erforderliche Kraftschluß zwischen Schneekette und Reifen verlorengeht. Der Spannzustand des Kettennetzes ist immer gegeben, denn das Rückstellvermögen der aus Kunststoffen bestehenden Tragarme ermöglicht, den idealen Spannzustand des Kettennetzes zu erhalten. Hinzu kommt, daß die Gleitschutzvorrichtung auch für Breitwandreifen verwendbar ist, wobei dann die Tragarme der Gleitschutzvorrichtung eine dem jeweils verwendeten Reifen entsprechende Länge aufweisen müssen, damit die Tragarme mit dem Kettennetz die Reifenlauffläche übergreifen können. Hinzu kommt, daß bei höheren Fahrgeschwindigkeiten sich das Kettennetz spannt, denn die Kette hebt sich geringfügig ab und wird durch das Gewicht der seitlichen Kettenabschnitte (Seitenketten) an die Reifenlauffläche herangezogen.

Hinzu kommt, daß die Länge der Tragarme nicht so bemessen sein muß, daß die Tragarme und das Kettennetz den Reifen hintergreifen müssen, so daß die Gleitschutzvorrichtung auch für Bereifungen eingesetzt werden kann, wo Ketten nicht zugelassen sind bzw. Ketten wegen eines zu geringen Zwischenraumes zwischen Reifeninnenseite und Fahrzeugteilen nicht verwendet werden können.

Die Montage der Gleitschutzvorrichtung ist einfach, denn die Gleitschutzvorrichtung weist zwischen zwei Tragarmen eine Öffnung für das Einsetzen bzw. für das Einführen des Rades auf, wobei nach dem Anlegen der Gleitschutzvorrichtung diese Radeingriffsöffnung mittels verschiedener Kettenabschnittsausgestaltungen verschließbar ist.

Da das Kettennetz mittels der Tragarme der Gleitschutzvorrichtung in einem geringfügigen Abstand oberhalb der Reifenlauffläche gehalten wird, wird die Gefahr des Reißens des Kettennetzes vermieden; diese Gefahr des Kettenreißens ist immer dann gegeben, wenn die Kette mit zu straffem Sitz auf dem Fahrzeugreifen gehalten ist. Hinzu kommt, daß das Ansetzen der Gleitschutzvorrichtung auch bei vereisten Radkästen möglich ist, da lediglich ein Zwischenraum zwischen dem oberen Bereich der Reifenlauffläche und dem unteren Abschluß des Kotflügels des Fahrzeuges vorhanden sein muß. dieser Zwischenraum ist bei Fahrzeugen immer, gegeben. Da das Kettennetz von den Tragarmen an der Lauffläche eines Fahrzeugreifens gehalten wird, entfällt jegliche Beschädigung der Radschüssel.

Die Schneekette selbst besteht aus einer an den freien Enden der Tragarme befestigten Kette und aus Kettenabschnitten, die einendseitig an der erstgenannten Kette und mit ihren anderen Enden an den Tragarmen befestigt sind, so daß ein schneekettenartiges Kettennetz erhalten wird. Darüber hinaus ist die Kette des Kettennetzes der Schneekette im Bereich zwischen zwei Tragarmen unter Ausbildung einer Radeingriffsöffnung bis an die Tragscheibe geführt und im Anschlußbereich der Tragarme an der Tragscheibe an den Tragarmen gehalten, wobei die Radeingriffsöffnung zwischen zwei Tragarmen mittels eines Kettenabschnittes verschließbar ist.

Bei einer Ausführungsform der Gleitschutzvorrichtung mit ausgebildeter Radeingriffsöffnung ist die an den freien Enden der Tragarme befestigte Kette der Schneekette im Bereich zwischen zwei Tragarmen zur Ausbildung dieser Radeingriffsöffnung unterbrochen ausgebildet, so daß das eine Ende der Kette an dem einen, die Radeingriffsöffnung begrenzenden Tragarm befestigt ist, während das an dem anderen Tragarm befestigte Ende der Kette verlängert ausgebildet ist, wobei der verlängerte Kettenabschnitt eine Länge aufweist, die größer ist als die Länge von zwei Tragarmen und dem Abstand zwischen zwei Tragarmen, und durch eine Durchlauföse am Ende der Kette hindurchgeführt ist, wobei an der Tragscheibe benachbart zu einem der beiden die Radeingriffsöffnung begrenzenden Tragarme eine Befestigungseinrichtung, wie Haken u.dgl., zum Einhaken des freien Endes des verlängerten Abschnittes der Kette vorgesehen ist.

Nach einer weiteren Ausführungsform der Erfindung ist die Kette der Schneekette im Bereich zweier eine Radeingriffsöffnung seitlich begrenzenden Tragarme unterbrochen ausgebildet und mit ihren freien Enden an den freien Enden der Tragarme befestigt, wobei die beiden, die Radeingriffsöffnung begrenzenden Tragarme an ihren einander gegenüberliegenden Längskanten je einen mit seinen Enden im oberen und unteren Bereich des Tragarmes an diesem befestigten Bügel tragen, der vom oberen freien Ende zu dem der Tragscheibe zugekehrten Ende konisch sich verjüngend ausgebildet ist, und wobei der Bügel im oberen Bereich einen ösenförmig ausgebildeten Abschnitt aufweist, während auf den beiden Bügeln eine Kette in Tragarmlängsrichtung verschieblich gehalten ist, durch deren Endkettenglieder die beiden Bügel an den beiden Tragarmen hindurchgeführt sind, wobei die Kette eine Länge aufweist, die in etwa dem Abstand der beiden Tragarme in deren unteren Bereichen entspricht.

Die Erfindung sieht jedoch ferner eine Ausgestaltung für die Ausbildung der Radeingriffsöffnung der Gleitschutzvorrichtung in der Weise vor, daß die gegenüber dem von den freien Enden der Tragarme gebildeten Umfang eine größere Länge aufweisende äußere Kette der Schneekette mit ihrem Ende an dem freien Ende eines der beiden die Radeingriffsöffnung begrenzenden Tragarme befestigt ist, wobei der das Kettenende tragende Tragarm einen ösenförmigen Durchlaufbeschlag aufweist, wobei die Kette mit ihrem anderen verlängerten Ende durch den Durchlaufbeschlag hindurchgeführt und mit ihrem Ende des verlängerten Kettenabschnittes mittels einer in an sich bekannter Weise ausgebildeten Befestigungsvorrichtung, wie Spannhaken, Kniehebel od.dgl., an der Tragscheibe befestigbar ist.

Zum Spannen der äußeren Kette ist das freie Ende des verlängerten Kettenabschnittes dieser äußeren Kette mit einem Federelement wie Schraubenfeder, Gummiband od.dgl., verbunden, das über an der Tragscheibe befestigte oder angeformte, auf einer Kreislinie angeordnete Führungen geführt und mit seinem freien Ende an der Tragscheibe befestigt ist. Da die Tragarme der Gleitschutzvorrichtung eine gewisse Elastizität und durch den jeweils verwendeten Kunststoff ein entsprechendes Rückstellvermögen aufweisen, ist ein Spannen der äußeren Kette durch Zug möglich, so daß dann nach dem Befestigen der äußeren Kette mit ihrem freien Ende an der Tragscheibe das Kettennetz der Gleitschutzvorrichtung im gespannten Zustand oberhalb bzw. vermittels der Tragarme auf der Lauffläche des Reifens liegt, da aufgrund des vorhandenen Rückstellvermögens die Tragarme das Bestreben haben, aus einer seitlichen, verschobenen Stellung, bedingt durch das Anziehen der Kette, wieder in ihre Ausgangsstellung zurückzugehen, so daß aufgrund dieses Verhaltens der Tragarme immer ein fester Sitz der Schneekette der Gleitschutzvorrichtung an dem Reifen gewährleistet ist.

Um die Tragarme bei Nichtgebrauch der Gleitschutzvorrichtung in eine an der Tragscheibe anliegende Stellung zu bringen, sind die Tragarme an der Tragscheibe so befestigt bzw. derart ausgebildet, daß die Tragarme in Richtung zur Tragscheibe biegbar oder verschwenkbar sind, so daß im abgebogenen oder eingeschwenkten Zustand die Tragarme an der Tragscheibenfläche zu liegen kommen, wodurch die Gleitschutzvorrichtungen z.B. für zwei Reifen auf kleinstem Raum im Kofferraum eines Fahrzeuges mitgeführt werden können, wobei auch mehrere Gleitschutzvorrichtungen mit feststehenden Tragarmen ineinandergesetzt auf kleinstem Raum vorrätig sein können oder in einem Kofferraum unterbringbar sind.

Weitere vorteilhafte Ausgestaltungen der Erfindung gehen aus den Unteransprüchen hervor. Besonders vorteilhaft ist hiernach die Ausgestaltung der Befestigungseinrichtung für die Gleitschutzvorrichtung nach Anspruch 17. Hiernach ist zur Befestigung der Tragscheibe an der Radscheibe bzw. Felge eines Rades eine kreisförmige Befestigungsscheibe mit einer Anzahl von Durchbrechungen für die Felgenschrauben, Radbolzen od.dgl. vorgesehen, die zentrisch eine kreisförmige, gegenüber dem Durchmesser der Befestigungsscheibe einen kleineren Durchmesser aufweisende Nabe trägt, die in einem Abstand von der Befestigungsscheibe benachbart zu ihrem oberen Rand an ihrem Umfang eine Anzahl von wulstartigen Ansätzen mit unterhalb diesen ausgebildeten, sich konisch von Einführöffnungen verjüngenden, in Nabenumfangrichtung verlaufenden Gleit- und Führungsbahnen aufweist und die die Nabe umschließende Tragscheibe mit den Tragarmen trägt, die mittels eines auf der Nabe aufgesetzten Sicherungsringes gesichert ist, der in die Gleit- und Führungsbahnen an der Nabe einführbare, eine bajonettartige Verriegelung bewirkende Verriegelungsstege mit sich zu den Einführöffnungen hin erstreckenden, konisch sich verjüngenden Abschnitten und an seiner Innenwandfläche mindestens einen blattfederartigen Schnäpper aufweist, der in verriegelter Stellung des Sicherungsringes an der Befestigungsscheibe in einer Ausnehmung am Umfang der Nabe eingreift und sich an einem Anschlag gegen ungewolltes Entriegeln abstützt und mittels eines Entriegelungsschlüssels aus der Verriegelungsstellung in eine Entriegelungsstellung überführbar ist, wobei die Tragscheibe mit den Tragarmen mit Spiel auf der Nabe der Befestigungsscheibe zur Durchführung exzentrischer Umlaufbewegungen angeordnet ist.

Mit einer derart ausgebildeten Befestigungseinrichtung ist das Anlegen der Gleitschutzvorrichtung, bestehend aus einer Tragscheibe mit einer Anzahl von die Schneekette tragenden Tragarmen, mühelos und in keiner Weise kraftaufwendig. Da die Befestigungseinrichtung, bestehend aus der Befestigungsscheibe und dem Sicherungsring an der Radfelge verbleibt, braucht zum Aufsetzen der Tragscheibe mit den Tragarmen lediglich der Sicherungsring von der an der Radfelge befestigen Befestigungsscheibe gelöst zu werden. Hierauf erfolgt dann das Aufsetzen der Tragescheibe auf die Nabe der Befestigungsscheibe. Mittels des dann aufgesetzten Sicherungsringes wird die Tragscheibe auf der Befestigungsscheibe derart verriegelt, daß die Tragscheibe mit Spiel auf der Nabe der Befestigungsscheibe und zwischen der Befestigungsscheibe und dem Sicherungsring gehalten ist. Aufgrund der bajonettartigen Verriegelung zwischen der Befestigungsscheibe und dem Sicherungsring ist die Gleitschutzvorrichtung, bestehend aus der Tragscheibe mit den Tragarmen, sicher gehalten. Das Lösen der Verriegelung erfolgt mittels eines Entriegelungsschlüssels, der zwei Abwinkelungen aufweist, mittels denen die blattfederartigen Schnäpper aus ihrer Verriegelungsstellung herausbewegt werden. Die Befestigungsscheibe mit der Nabe und dem aufgesetzten Sicherungsring kann ständig an der Radfelge eines Fahrzeuges verbleiben, während die eigentliche Gleitschutzvorrichtung, nämlich die Tragscheibe mit den die Schneekette tragenden Tragarmen, bei Bedarf angelegt wird.

Besonders vorteilhaft ist dabei die Ausgestaltung, nach der die Tragscheibe mit den die Schneekette tragenden Tragarmen mit Spiel auf der Nabe der Befestigungsscheibe angeordnet ist. Dadurch, daß die Tragscheibe mit einem relativ großen Spiel auf der Nabe der Befestigungsscheibe gehalten ist, ist die Tragscheibe in der Lage, exzentrische Bewegungen durchzuführen, denn die Tragscheibe mit den Tragarmen muß während des Betriebes der Gleitschutzvorrichtung die Walkbewegungen des Reifens mit nachvollziehen und darf daher nicht fest bzw.starr an der Felge angeordnet sein. Dadurch, daß die Tragscheibe mit Spiel auf der Nabe der Befestigungsscheibe gehalten ist, kann die Tragscheibe in Anpassung an die Walkbewegungen des Reifens Taumelbewegungen durchführen. Auf diese Weise wird gewährleistet, daß die Tragarme der Gleitschutzvorrichtung im Betriebszustand immer eine Stellung einnehmen, in der die Tragarme an der Seitenwandfläche des Reifens anliegen und die Reifenlauffläche übergreifen.

Eine weitere vorteilhafte Ausgestaltung der Erfindung besteht darin, daß die Gleitschutzvorrichtung zur Befestigung der Tragscheibe eine mit der Radscheibe bzw. Felge verbundene Befestigungsscheibe aufweist, die mit verriegelbaren Halterungen für die Tragscheibe versehen ist, wobei die Befestigungsscheibe unlösbar mit der Radscheibe bzw. Felge verbunden ist und einen Bestandteil des Rades bildet. Da die Befestigungsscheibe und der Sicherungsring bei dieser Ausführungsform an der Radfelge verbleibt, braucht zum Aufsetzen der Tragscheibe mit den Tragarmen lediglich der Sicherungsring von der mit der Radfelge verbundenen Befestigungsscheibe gelöst zu werden. Hierauf erfolgt dann das Aufsetzen der Tragscheibe auf die Nabe der Befestigungsscheibe. Mittels des dann aufgesetzten Sicherungsringes wird die Tragscheibe auf der Befestigungsscheibe derart verriegelt, daß die Tragscheibe mit Spiel auf der Nabe der Befestigungsscheibe und zwischen der Befestigungsscheibe und dem Sicherungsring gehalten ist.

Im folgenden wird der Gegenstand der Erfindung in den Zeichnungen erläutert. Es zeigt

Fig. 1 in einer schaubildlichen Ansicht die ein Kettennetz als Schneekette aufweisende Gleitschutzvorrichtung in an dem Reifen eines Fahrzeuges angelegtem Zustand,

Fig. 2 in einer Ansicht von oben zwei Tragarme der Gleitschutzvorrichtung mit der Kettenführung der Schneekette,

Fig. 3 in einer Ansicht von oben eine weitere Ausführungsf dorm einer Kettenführung der Gleitschutzvorrichtung zwischen zwei Tragarmen der Gleitschutzvorrichtung zur Ausbildung einer Radeingriffsöffnung,

Fig. 4 in einer Ansicht von oben eine weitere Ausführungsform einer Kettenführung der Schneekette zwischen zwei Tragarmen der Gleitschutzvorrichtung unter Verwendung von zwei Führungsbügeln und einem in Tragarmlängsrichtung verschieblichen Kettenabschnitt zur Ausbildung einer Radeingriffsöffnung,

Fig. 5 eine Ansicht von oben auf einen Reifen eines Fahrzeuges mit angesetzter Gleitschutzvorrichtung und einer die äußere Kette der von den Tragarmen gehaltenen Schneekette spannenden Einrichtung,

Fig. 6 in einer vergrößerten senkrechten Schnitt das Ende eines Tragarmes mit angelegter, äußerer Kette des Kettennetzes der Gleitschutzvorrichtung,

Fig. 7 in einer vergrößerten Ansicht von oben eine weitere Ausführungsform einer Befestigung der äußeren Kette des Kettennetzes der Gleitschutzvorrichtung am Ende eines Tragarmes,

Fig. 8 teils in Ansicht, teils in einem senkrechten Schnitt einen an der Tragscheibe befestigten, mit einem bandscharnierartigen Abschnitt versehenen Tragarm in Betriebsstellung und in eingeschwenkter Stellung,

Fig. 9 in ausgeschwenkter und eingeschwenkter Stellung einen ein- und ausschwenkbaren sowie drehbaren Tragarm,

Fig. 10 teils in Ansicht, teils in einem senkrechten Schnitt eine weitere Ausführungsform eines ein- und ausklappbaren, an der Tragscheibe der Gleitschutzvorrichtung angelenkten Tragarmes,

Fig. 11 als teilweise senkrechter Schnitt ein Kraftfahrzeugrad mit die Reifenlauffläche übergreifenden Tragarmen der Gleitschutzvorrichtung,

Fig. 12 in einer Ansicht von oben einen Abschnitt der die Tragarme tragenden Tragscheibe der Gleitschutzvorrichtung,

Fig. 13 in einer Ansicht von oben die Befestigungsscheibe mit der Nabe der Befestigungseinrichtung für die Gleitschutzvorrichtung,

Fig. 14 einen senkrechten Schnitt der Befestigungsscheibe,

Fig. 15 eine Seitenansicht der Befestigungsscheibe,

Fig. 16 einen Verschlußbereich an der Befestigungsscheibe,

Fig. 17 in einer Ansicht von oben den Sicherungsring der Befestigungseinrichtung für die Gleitschutzvorrichtung,

Fig. 18 in einer Ansicht von oben einen Entriegelungsschlüssel und

Fig. 19 in einer Vorderansicht den Entriegelungsschlüssel.

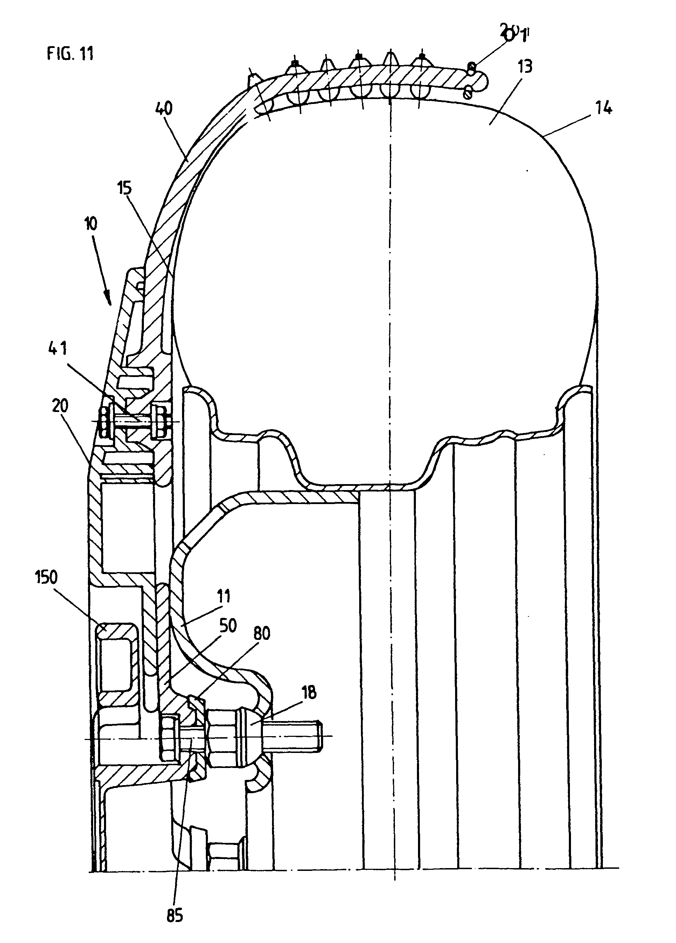

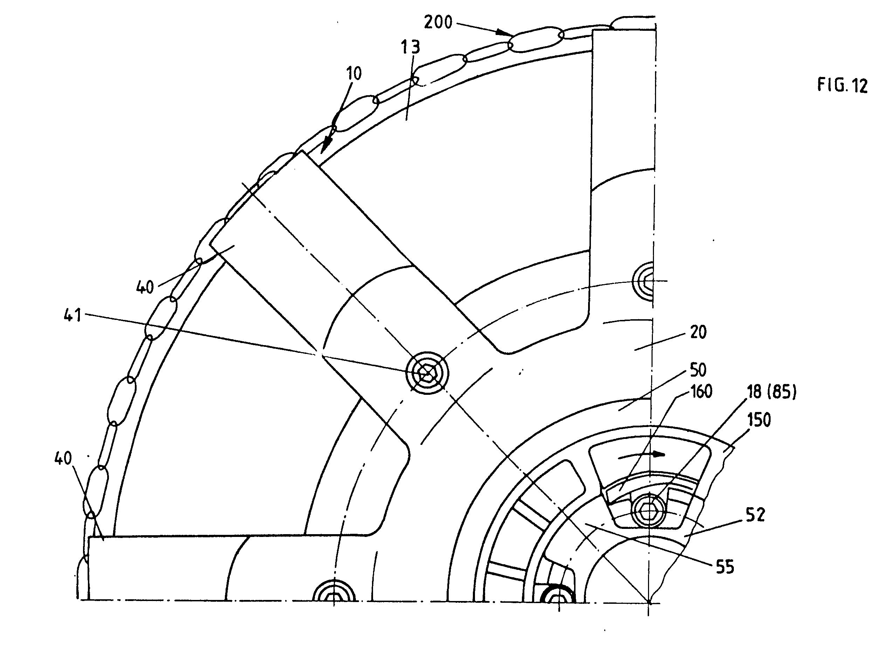

Wie Fig. 11 und 12 zeigen, besteht die Gleitschutzvorrichtung 10 aus einer mit einer mittigen Durchbrechung versehenen, d.h. ringförmigen, Tragscheibe 20, an der eine Anzahl radial verlaufender Tragarme 40 befestigt ist, die im gleichen Abstand voneinander angeordnet und um parallel zur Radscheibenlagerachse verlaufende Achsen 41 in einem kleinen Bereich verschwenkbar sind, wobei jedoch die Tragarme 40 auch fest an der Tragscheibe 20 befestigt sein können. Die Verschwenkbarkeit der Tragarme 40 in einem kleinen Bereich ermöglicht es, bei stehendem Fahrzeug die Gleitschutzvorrichtung anbringen zu können. Bei den ersten Umdrehungen des Fahrzeugrades stellen sich alle Tragarme dann 40 in einem gleichen Abstand zueinander auf, auch wenn während des Anlegens der Gleitschutzvorrichtung im Bereich der Reifenauflagefläche auf einem Untergrund, wie Straße od.dgl., die Tragarme seitlich zur Reifenauflagefläche zu liegen kommen.

Die Tragarme bestehen aus metallischen Werkstoffen oder anderen geeigneten Werkstoffen, wobei die Tragarme auch aus Kunststoffen bestehen können. Sind die Tragarme 40 fest an der Tragscheibe 20 befestigt und bestehen die Tragarme aus Kunststoffen, die ein gewisses federnd-elastisches und inbesondere Rückstellvermögen haben, dann können die im Bereich der Reifenauflagefläche liegenden Tragarme seitlich auseinandergebogen werden, so daß sie neben der Reifenauflagefläche an dem Reifen zu liegen kommen, wobei dann bei einem Anfahren des Fahrzeuges diese Tragarme ihre richtige radiale Stellung einnehmen, was bewirkt wird durch das vorhandene Rückstellvermögen der verwendeten Kunststoffe zur Herstellung den Tragarme 40.

Die Gleitschutzvorrichtung ist an dem mit einem Reifen 13 versehenen Rad, welches gleichzeitig die Felge darstellt, befestigt. Das Rad 11 ist mit einem in der Zeichnung nicht dargestellten Bremsteil versehen. Der Laufflächenbereich des Reifens 13 ist mit 14 und die Außenseitenfläche des Reifens mit 15 bezeichnet (Fig. 11).

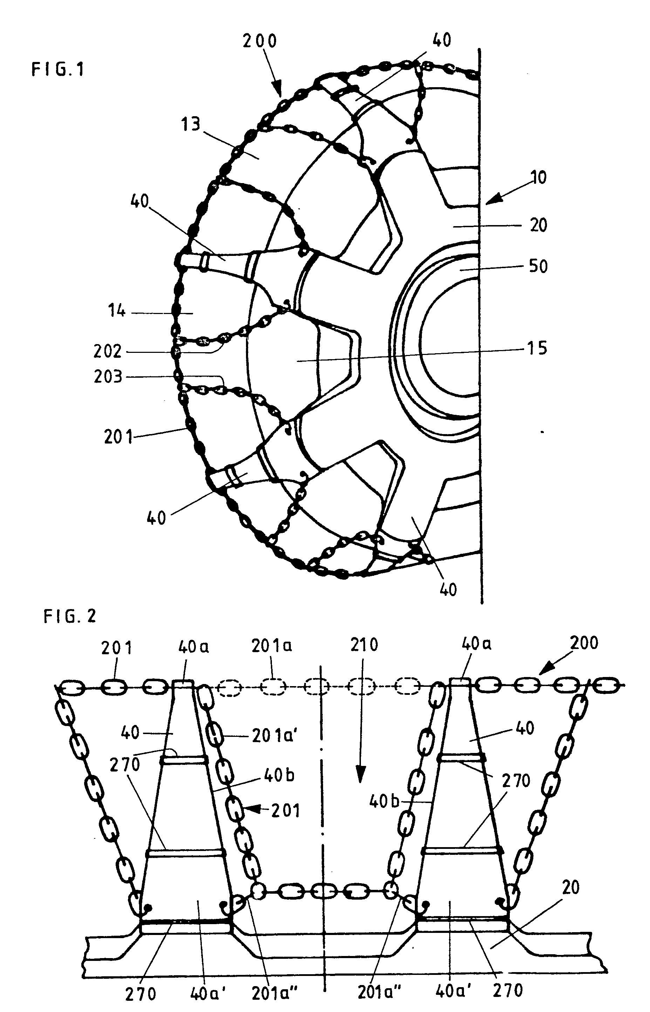

Die Tragarme 40 tragen gemäß Fig. 1 und 2 eine Schneekette 200, die von einem Kettennetz gebildet wird, das aus einer äußeren Kette 201, die an den freien Enden 40a der Tragarme 40 befestigt ist und aus weiteren Kettenabschnitten 202, 203 besteht, die mit ihrem einen Ende an der Kette 201 und mit ihren anderen Enden an den Tragarmen 40 befestigt sind, so daß z.B. ein leiterkettenartiges Kettennetz erhalten wird (Fig. 1). Die Kettenabschnitte 202, 203 können jedoch auch so geführt angeordnet und gestaltet sein, daß Kettennetze erhalten werden, die dem der Zick-Zack-Kette, der Umlauf-Zick-Zack-Kette, der Spurenkreuz-Kette oder der asymmetrischen Spurenkreuz-Kette entsprechen wobei jedoch auch andersartig gestaltete Kettennetze Verwendung finden können.

Ist die Kette 201 endlos ausgebildet, dann sind alle Tragarme 40 der Gleitschutzvorrichtung mittels dieser Kette 201 verbunden, und zwar auch derjenige Bereich zwischen zwei Tragarmen 40, der als Öffnung zum Einführen des Reifens beim Anlegen der Gleitschutzvorrichtung dient. Diese Radeingriffsöffnung ist in Fig. 2 bei 210 angedeutet. In diesem Fall der Ausgestaltung des Kettennetzes der Schneekette 200 der Gleitschutzvorrichtung sind die beiden die Radeingriffsöffnung 210 begrenzenden Tragarme in gleicher Weise wie alle Tragarme durch die einzelnen Abschnitte der Kette 201 miteinander verbunden. Dieser Kettenabschnitt ist in Fig. 2 mit 201a bezeichnet und verbindet die beiden die Radeingriffsöffnung 210 begrenzenden Tragarme 40.

Die Kette 201 kann auch in anderer Weise endlos ausgebildet sein, wobei dann entsprechend der in Fig. 2 gezeigten Ausführungsform die Kette 201 im Bereich der beiden die Radeingriffsöffnung 210 begrenzenden Tragarme mit einem Abschnitt 201a' an den einander gegenüberliegenden Längskanten 40b der beiden Tragarmer 40 und im Bereich der Tragscheibe 20, wie in Fig. 2 dargestellt, geführt ist. Im Anschlußbereich der beiden Tragarme 40 an die Tragscheibe 20 ist der Kettenabschnitt 201a' der Kette 201 über Kettenglieder 201'' an den Basisbereichen 40a' der beiden Tragarme befestigt. Auch im angelegten Zustand der Gleitschutzvorrichtung verbleibt der Kettenabschnitt 201a' der äußeren Kette 201 der Schneekette 200 der Gleitschutzvorrichtung in der in Fig. 2 dargestellten Stellung.

Aufgrund dieser Führung der Kette 201 mit seinem Kettenabschnitt 201a' wird eine Radeingriffsöffnung 210 geschaffen, die es ermöglicht, im Stand des Fahrzeuges, ohne daß dieses bewegt zu werden braucht, die Gleitschutzvorrichtung anzulegen, da im Bereich der Reifenstandfläche der Kettenabschnitt 201a' sonst nicht über die Reifenlauffläche gebracht werden kann, was aber nicht erforderlich ist, da beim Anfahren des Fahrzeuges sich darüber hinaus auch noch die Tragarme 40 radial ausrichten und dabei das gesamte Kettennetz spannen, so daß nach dem Anlegen der Gleitschutzvorrichtung die vorher ausgebildete Radeingriffsöffnung 210 nicht verschlossen zu werden braucht, wie dies in Fig. 2 mit dem Kettenabschnitt 201a angedeutet ist.

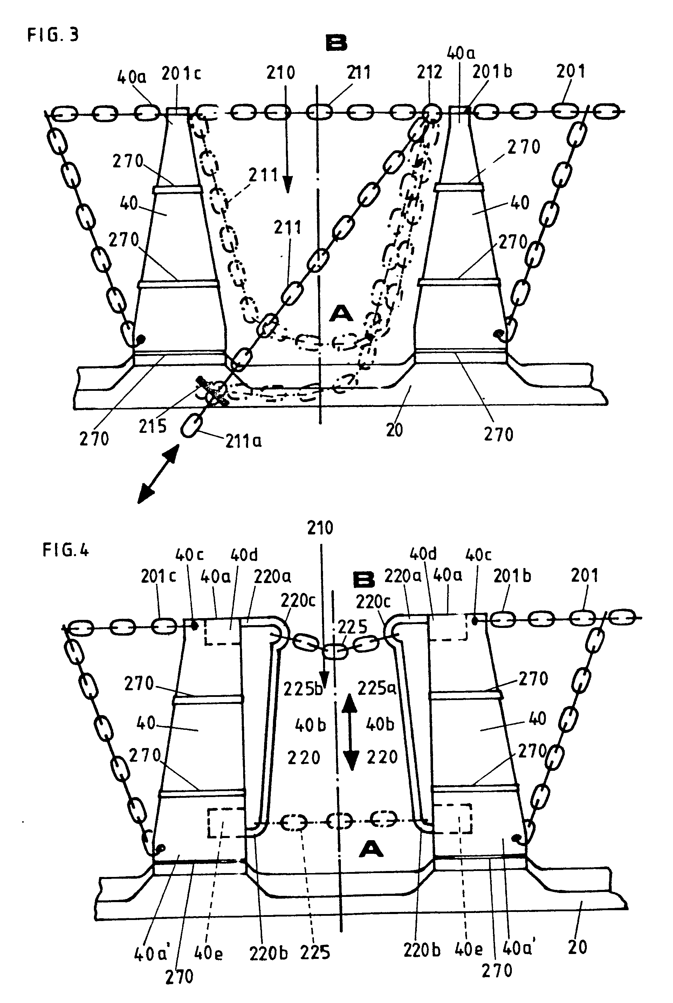

Zur Ausbildung einer Radeingriffsöffnung 210 ist gemäß Fig. 3 die an den freien Enden 40a der Tragarme 40 befestigte äußere Kette 201 der Schneekette 200 im Bereich zwischen zwei Tragarmen 40 unterbrochen ausgebildet, so daß das eine Ende 201b der Kette 201 an dem einen der beiden die Radeingriffsöffnung 210 begrenzenden Tragarme 40 befestigt, während das an dem anderen Tragarm 40 befestigte Ende 201c der Kette 201 zwar auch mit einem Kettenring an dem freien Ende 40a des Tragarmes 40 befestigt ist, jedoch verlängert ausgebildet. Dieser mit 211 bezeichnete verlängerte Kettenabschnitt weist eine Länge auf, die größer ist als die Länge von zwei Tragarmen 40 und dem Abstand zwischen den beiden Tragarmen. Außerdem ist dieser verlängerte Kettenabschnitt 211 durch eine Durchlauföse 212 an dem Ende 201b der Kette 201 hindurchgeführt. An der Tragscheibe 20 ist benachbart zu einem der beiden die Radeingriffsöffnung 210 begrenzenden Tragarme 40 eine Befestigungseinrichtung 215 vorgesehen, die in an sich bekannter Weise ausgebildet und z.B. als hakenförmiger Kniehebel ausgebildet. ist und zum Einhaken des freien Endes 211a des verlängerten 1 Kettenabschnittes 211 der Kette 201 dient. Während des Ansetzens der Gleitschutzvorrichtung an einen Fahrzeugreifen nimmt der Kettenabschnitt 211 die in Fig. 3 bei A dargestellte Stellung ein, so daß die Öffnung 210 für das Ansetzen und den Eingriff des in der Zeichnung nicht dargestellten Reifens ausgebildet ist. Ist die Gleitschutzvorrichtung angesetzt und übergreifen die Tragarme 40 mit ihrem Kettennetz die Reifenlauffläche, dann wird der Kettenabschnitt 211 und somit die Kette 201 gespannt bis der Kettenabschnitt 211 die in Fig. 3 gezeigte Stellung B einnimmt.

Weist die Gleitschutzvorrichtung eine geschlossene Kette 201 auf, dann erfolgt das Ansetzen der Gleitschutzvorrichtung in der Weise, daß beim Ansetzen der Tragscheibe 20 mit den Tragarmen 40 diese mit ihrem Kettennetz über den oberen Bereich des Reifens gestülpt werden. Das Fahrzeug wird dann um eine halbe Radumdrehung verfahren und der restliche Abschnitt der Gleitschutzvorrichtung mit seinen Tragarmen und dem Kettennetz über den Reifen gestülpt, worauf dann die Verriegelung erfolgt. Weist dagegen die Gleitschutzvorrichtung die Möglichkeit der Ausbildung einer Radeingriffsöffnung entsprechend Fig. 3 auf, dann ist ein Bewegen des Fahrzeuges zum Ansetzen der Gleitschutzvorrichtung nicht erforderlich, da der Reifen im Bereich seiner Standfläche in die etwa U-förmig ausgebildete Radeingriffsöffnung 210 paßt.

Auch bei der in Fig. 4 gezeigten Ausführungsform ist die Ausbildung einer Radeingriffsöffnung 210 möglich. Hier ist die Kette 201 der Schneekette 200 im Bereich zweier die Radeingriffsöffnung 210 seitliche begrenzenden Tragarme 40 unterbrochen ausgebildet. Die Kette 201 ist mit ihren freien Enden 201b, 201c an den freien Enden 40a der beiden Tragarme 40 bei 40c befestigt. Die beiden die Radeingriffsöffnung 210 seitlich begrenzenden Tragarme 40 weisen an ihren einander gegenüberliegenden Längskanten 40b je einen mit seinen Enden 220a, 220b im oberen und im unteren Bereich des Tragarmes 40 bei 40d, 40e befestigten Bügel 220 auf. Die beiden Bügel 220 sind gleich ausgebildet. Die Anordnung und Ausbildung dieser beiden Bügel 220 an den Tragarmen 40 ist derart, daß sich die Bügel 220 von den oberen freien Enden 40a der Tragarme 40 zu den der Tragscheibe 20 zugekehrten Enden 40a' der Tragarme sich konisch verjüngen, wie dies in Fig. 4 dargestellt ist. Im oberen Bereich weist jeder Bügel 220 einen ösenförmig ausgebildeten Abschnitt 220c auf, wobei die ösenförmig ausgebildeten Abschnitte 220c der beiden Bügel 220 sich gegenüberliegend sind. Auf den beiden Bügeln 220 ist eine Kette 225 in Tragarmlängsrichtung verschieblich gehalten. Hierzu sind die Bügel 220 durch die Endkettenglieder 225a, 225b der Kette 225 hindurchgeführt. Die Kette 225 weist eine Länge auf, die in etwa dem Abstand der beiden Tragarme 40 in deren unteren Bereichen 40a' entspricht.

Um die Öffnung 210 für den Eingriff des Reifens freizugeben, wird die Kette 225 auf den beiden Bügeln 220 soweit in Richtung zur Tragscheibe 20 verschoben, bis die Kette 225 die Stellung A einnimmt. Die Radeingriffsöffnung 210 ist dann freigegeben; die Gleitschutzvorrichtung kann an den Reifen angesetzt werden, ohne daß auch bei dieser Ausführungsform das Fahrzeug zum Anlegen der Gleitschutzvorrichtung bewegt werden muß. Ist die Gleitschutzvorrichtung an dem Fahrzeugreifen angelegt, dann wird die Kette 225 aus ihrer Stellung A in die Stellung B bewegt, so daß die Kette 225 in den ösenförmigen Abschnitten 220c der beiden Bügel 220 gehalten wird. Es ist jedoch nicht erforderlich, daß die Kette 225 in die Verschlußstellung B von Hand verschoben werden muß. Verbleibt die Kette 225 nach dem Anlegen der Gleitschutzvorrichtung in der Stellung A, dann verschiebt sich die Kette 225 auf den Bügeln 220 beim Anfahren des Fahrzeuges selbsttätig, so daß die äußere Kette 201 im Bereich der Radeingriffsöffnung 210 mittels der Kette 225 geschlossen ist.

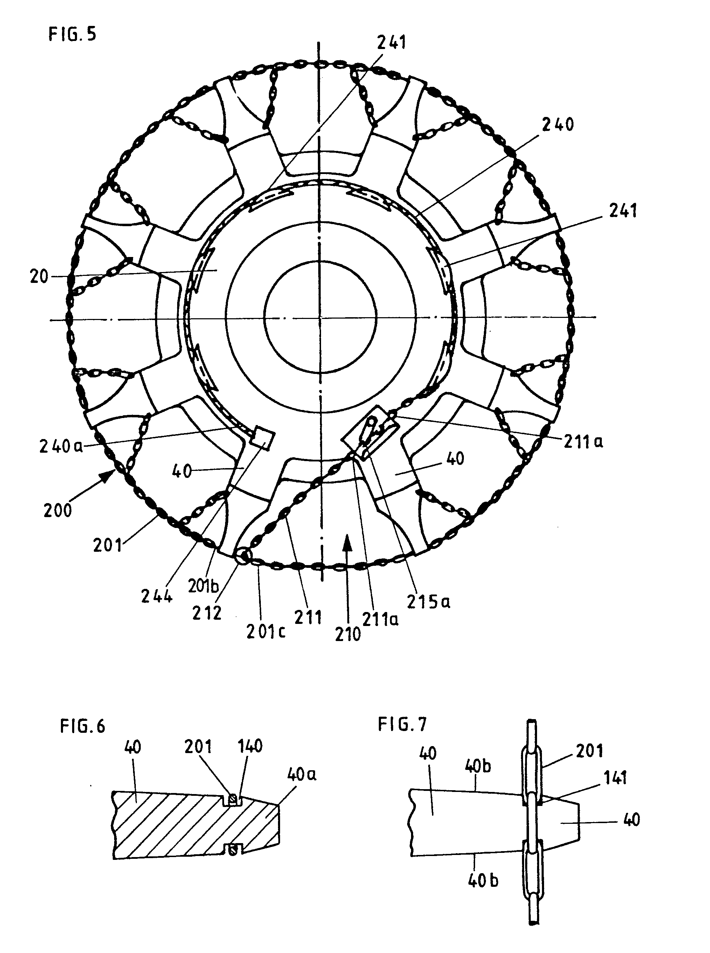

Ist die Kette 201 zur Ausbildung einer Radeingriffsöffnung 210 unterbrochen ausgebildet und ist die Kette zum Verschließen dieser Radeingriffsöffnung 210 nach dem Anlegen der Gleitschutzvorrichtung mittels des Kettenabschnittes 211 entsprechend der Ausführungsform nach Fig. 3 geschlossen, dann besteht die Möglichkeit, daß der Kettenabschnitt 211 und somit auch die Kette 201 selbsttätig gespannt wird. Hierzu ist gemäß Fig. 5 die gegenüber dem von den freien Enden 40a der Tragarme 40 gebildeten Umfang eine größere Länge aufweisende Kette 201 mit ihrem Kettenabschnitt 211 der Schneekette 200 mit ihrem Ende 201b an dem freien Ende 40a eines der beiden die Radeingriffsöffnung 210 begrenzenden Tragarme befestigt, während der das Kettenende 201b tragende Tragarm 40 einen ösenförmigen Durchlaufbeschlag 212 aufweist, durch den das andere Ende bzw. der andere Endabschnitt 211 der Kette 201 hindurchgeführt ist. Das Ende 211a des verlängerten Kettenabschnittes 211 der Kette 201 ist dann mittels einer in an sich bekannter Weise ausgebildeten Befestigungseinrichtung 215a an der Tragscheibe 20 befestigt, wobei diese Befestigungseinrichtung 215a als Spannhaken, Kniehebelverschluß od.dgl. derart ausgebildet sein kann, daß unabhängig von einer Befestigung des Kettenabschnittes 211 an der Tragscheibe 20 auch noch ein Spannen der Kette 201 und ihres Kettenabschnittes 211 möglich ist. In diesem Fall ist die Befestigungseinrichtung 215a als Klemmeinrichtung ausgebildet und kommt zusätzlich zu entsprechend ausgebildeten Spannelementen zur Wirkung.

Für das Spannen der Kette 201 bzw. ihres Kettenabschnittes 211 ist das Kettenende 211a des verlängerten Kettenabschnittes 211 der Kette 201 mit einem Elastik- oder Federzug in Form eines Federelementes 240 verbunden, welches als Schraubenfeder, Gummiband od.dgl. ausgebildet sein kann. Dieses Federelement 240 ist über an der Tragscheibe 20 befestigte oder angeformte, auf einer Kreislinie angeordnete Führungen 241 geführt und mit seinem freien Ende 240a an der Tragscheibe 20 bei 244 befestigt. Die Führungen 241 zur Aufnahme des Federelementes 240 sind als kreisbogenformige Formkorper mit einer Aufnahmenut für das Federelement ausgebildet, so daß ein seitliches Abrutschen des Federelementes 240 von den Führungen 241 vermieden wird (Fig.5). Die Befestigungseinrichtung 215a dient dann lediglich zur zusätzlichen Befestigung der Kette 201 bzw. ihres Kettenabschnittes 211 an der Tragscheibe 20. Wird die Kette 201 mit ihrem Kettenabschnitt 211 ohne Verwendung eines Federelementes 240 von Hand gespannt, dann hält die Befestigungseinrichtung 215a die Kette 201 und ihren Kettenabschnitt 211 in der vorgegebenen Spannstellung. Als Befestigungseinrichtung 215a für die Kette 201 kann auch eine Curryklemme oder Kammklemme an der Tragscheibe 20 vorgesehen sein.

Die äußere Kette 201 der an den Tragarmen 40 befestigten Schneekette 200 ist an den freien Enden 40a der Tragarme 40 befestigt. Hierzu weist jeder Tragarm an seinem freien Ende 40a eine Ringnut 140 zur Aufnahme und Halterung des ringförmigen Gliedes der Kette 201 der Schneekette 200 auf (Fig.6). Bei der in Fig. 6 gezeigten Ausführungsform weist jeder Tragarm 40 an seinem freien Ende 40a, und zwar im Bereich seiner beiden Längskanten 40b, Ausnehmungen 141 auf, die zur Aufnahme und Halterung des ringförmigen Gliedes der Kette 201 der Schneekette 200 dienen. Jedoch auch andersartig ausgebildete Befestigungseinrichtungen können an den Tragarmen 40 zur Aufnahme und Halterung der Kette 201 der Schneekette 200 dienen. Die Tragarme 40 selbst sind an der Tragscheibe 20 lös- und/oder austauschbar befestigt.

Um die Gleitschutzvorrichtung, und zwar umfassend die Tragscheibe 20 mit ihren Tragarmen 40 und dem Kettennetz der Schneekette 200, auf kleinsten Raum, beispielsweise in einem Kofferraum, unterzubringen, ist jeder Tragarm 40 an der Tragscheibe 20 so befestigt, daß die Tragarme in Richtung zur Tragscheibe biegbar oder virschwenkbar sind.

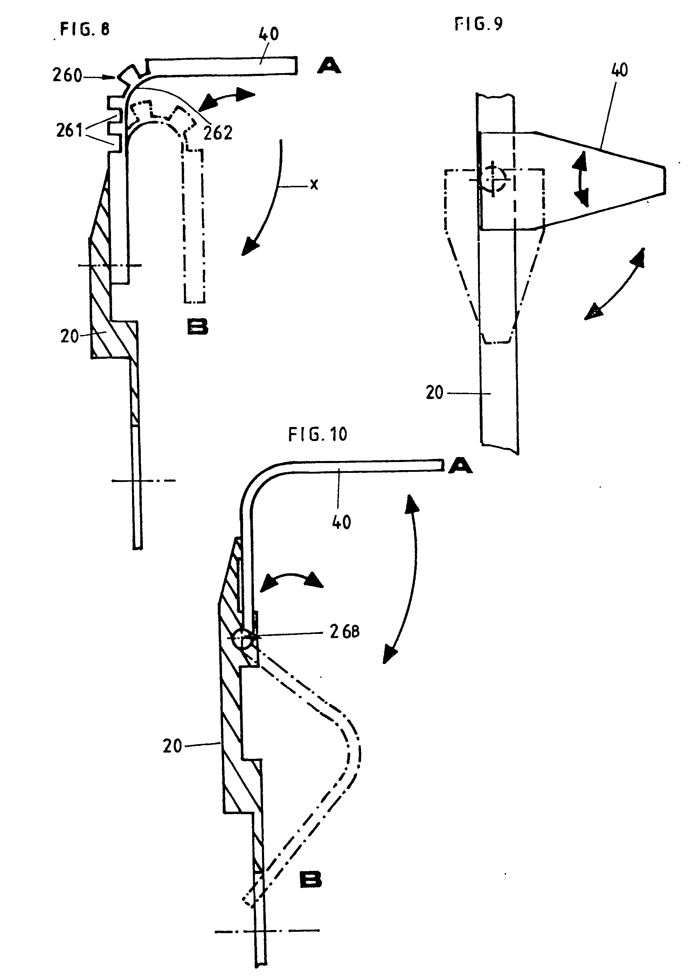

Nach der in Fig. 8 gezeigten Ausführungsform ist jeder Tragarm 40 benachbart zu seinem Befestigungsbereich an der Tragscheibe 20 zur Ausbildung eines Bandscharnieres 260 mit einem Einkerbungen od.dgl. 261 aufweisenden Abschnitt versehen, so daß aufgrund dieser bandscharnierartigen Ausgestaltung des Tragarmabschnittes 262 die Tragarme 40 von der in Fig. 8 bei A angedeuteten Betriebsstellung durch Verschwenken in Pfeilrichtung X an die Tragscheibe 20 anlegbar sind. Diese Stellung des Tragarmes 40 ist bei B angedeutet. Zur Halterung des so eingeschwenkten Tragarmes 40 kann eine der Zeichnung nicht dargestellte Einrichtung vorgesehen sein, mittels der der eingeschwenkte Tragarm 40 in der Stellung B gehalten wird Diese Festhalteeinrichtung kann z.B. ein Gummiband od.dgl.sein. Durch die Möglichkeit des Einschwenkens der Tragarme 40 ist eine platzsparende Unterbringung der Gleitschutzvorrichtung möglich.

Jeder Tragarm 40 der Tragscheibe 20 kann jedoch auch einsteckbar an der Tragscheibe gehalten sein, wobei dann darüber hinaus der Tragarm 40 dreh- und schwenkbar an der Tragscheibe 20 gehalten ist, so daß ein Abklappen und Anlegen der Tragarme 40 an die Tragscheibe möglich ist (Fig. 9).

Bei der in Fig. 10 gezeigten Ausführungsform ist der vorgebogene Tragarm 40 an der Tragscheibe 20 bei 268 angelenkt, wodurch die Möglichkeit gegeben ist, den Tragarm 40 aus der Betriebsstellung A in die Stellung B zur Anlage an die Tragscheibe 20 verschwenken zu können. Auch bei dieser Ausführungsform ist eine platzsparende Unterbringung der Gleitschutzvorrichtung in einem Kofferraum möglich, da in eingeschwenktem Zustand aller Tragarme 40 die Gleitschutzvorrichtung nur eine geringe Höhe aufweist Um die Tragarme 40 in der Betriebsstellung A halten zu können, ist an der Tragscheibe 20 für jeden Tragarm 40 eine in der Zeichnung nicht dargestellte Feststelleinrichtung vorgesehen, die z.B. aus einem Verriegelungsbolzen od.dgl. bestehen kann, um die Tragarme 40 in der ausgeschwenkten Stellung A halten zu können.

Die Befestigung eines jeden Tragarmes 40 an der Tragscheibe 20 erfolgt mittels bolzen- oder nietartiger Verbindungsmittel, wobei auch eine lösbare Befestigung der Tragarme 40 an der Tragscheibe 20 möglich ist, um verschlissene Tragarme 40 gegen neue Tragarme austauschen zu können. Wie Fig. 12 zeigt, sind an der Tragscheibe 20 acht Tragarme 40 vorgesehen, wobei die Anzahl der Tragarme beliebig gewählt sein kann; die Anzahl der Tragarme an der Tragscheibe 20 wird auch von der Größe der Gleitschutzvorrichtung und des Reifens abhängen, für den die Gleitschutzvorrichtung vorgesehen ist. Alle Tragarme 40 sind im gleichen Winkelabstand voneinander angeordnet. Jeder Tragarm 40 der das Kettennetz bzw. die Schneekette 200 tragenden Tragarme 40 besteht aus federnd-elastischem Werkstoff, wie beispielsweise einem geeigneten Kunststoff oder Federstahl, so daß ein elastisches Abbiegen des freien Endabschnittes eines jeden Tragarmes 40 in den Bereich der Lauffläche 14 des Reifens 13 möglich ist. Die Tragarme 40 sind derart vorgeformt, daß nach dem Ansetzen der Gleitschutzvorrichtung 10 an einem Fahrzeugrad die Tragarme mit ihren freien Enden die Reifenlauffläche 14 übergreifen. (Fig. 1).

An den freien Enden können die Tragarme 40 außenseitig Greifprofile aufweisen, so daß über die hohe Wirksamkeit des Kettennetzes der Schneekette 200 auch noch die Griffigkeit der Gleitschutzvorrichtung erhöhbar ist. Diese Greifprofile können auch als Spikes ausgebildet oder mit Spikes versehen sein.

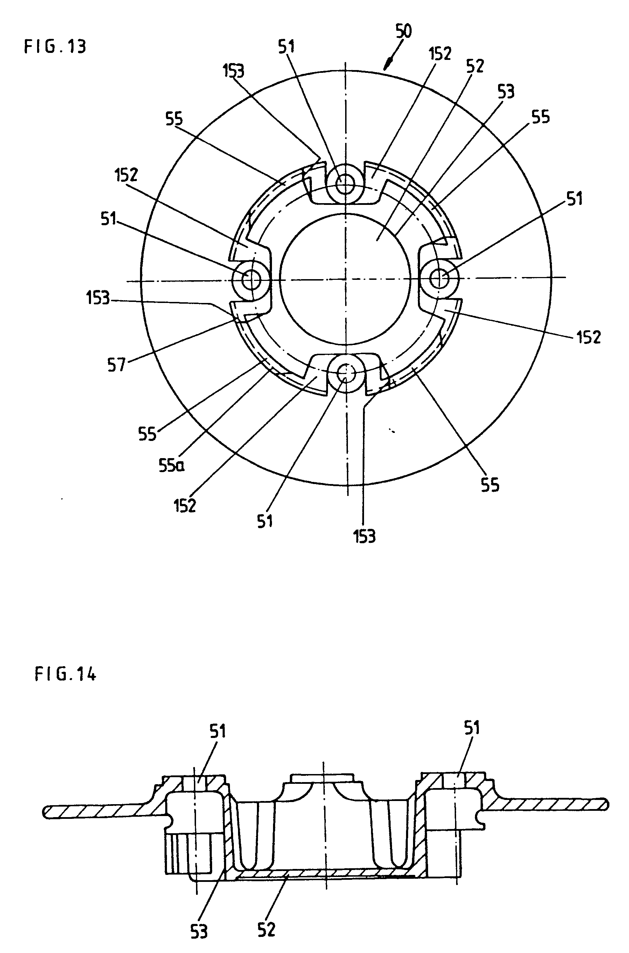

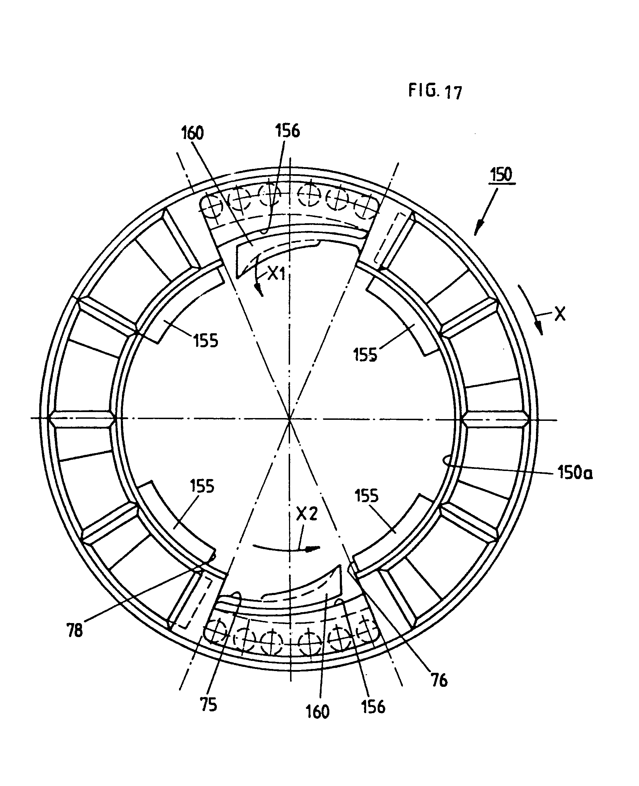

Die Befestigungseinrichtung für die Gleitschutzvorrichtung 10 an der Felge eines Fahrzeugrades besteht aus einer Befestigungsscheibe 50 und einem Sicherungsring 150 (Fig. 13 und 17). Nach einer weiteren Ausführungsform ist die Befestigungsscheibe 50 integrierter Bestandteil des Fahrzeugrades. Rad und Befestigungsscheibe 50 bilden dann ein Walz- oder Formstück.

Die Befestigungsscheibe 50 ist mit einer Anzahl von Durchbrechungen 51 versehen, die zum Hindurchführen der Felgenschrauben, Radbolzen od.dgl. 18 dienen. Wie Fig. 11 zeigt, sind die Felgenschrauben oder Radbolzen 18 zur Befestigung der Befestigungsscheibe 50 mit ein Innengewinde aufweisenden Bohrungen zur Aufnahme von Sicherungsschrauben 85 versehen, mittels der die Befestigungsscheibe 50 an der Radfelge 11 befestigbar ist.

Die kreisförmige Befestigungsscheibe 50 weist mittig eine im Querschnitt kreisförmige Nabe 52 auf, die als zylindrischer Formkörper ausgebildet und integrierter Bestandteil der Befestigungsscheibe 50 ist. Diese Nabe 52 weist einen Durchmesser auf, der gegenüber dem Durchmesser der Befestigungsscheibe 50 kleiner ist.

An ihrem Außenumfang, und zwar benachbart zum oberen umlaufenden Rand 53, weist die Nabe 52 eine Anzahl von wulstartigen Ansätzen 55 auf, die im gleichen Abstand voneinander angeordnet sind. Bei dem in Fig. 13 gezeigten Ausführungsbeispiel sind an der Nabe 52 der Befestigungsscheibe 50 vier aus dem Umfang der Nabe seitlich auskragende wulstartige Ansätze 55 vorgesehen.

Unterhalb eines jeden wulstartigen Ansatzes 55 ist eine Gleit- und Führungsbahn 60 ausgebildet. Diese Gleit- und Führungsbahn 60 ist als Ausnehmung ausgebildet und weist eine Einführöffnung 56 auf, von der sich die Gleit- und Führungsbahn 60 zum Endbereich konisch verjüngt, so daß die Einführöffnung 56 gegenüber dem Endbereich 56a größer bemessen ist. Die die Gleit- und Führungsbahn 60 bildende Ausnehmung ist hiernach keilförmig verlaufend und im dem zur Befestigungsscheibe 50 benachbarten Bereich durch eine Ringwulst 57 begrenzt. Der Endbereich 56a der Gleit- und Führungsbahn 60 weist ebenfalls eine Begrenzung in Form eines Anschlages auf, der jedoch nicht unbedingt vorhanden sien muß.

Die Ringwulst 57, die am Außenumfang der Nabe 52 angeformt ist, stellt gleichzeitig die obere Begrenzung für die auf die Nabe 52 der Befestigungsscheibe 50 aufgesetzte Tragscheibe 20 dar (Fig.13). Im Bereich der Durchbrechungen 51 ist diese Ringwulst 57 unterbrochen, da ein Teilabschnitt einer jeden Durchbrechung 51 als Teilbohrung bis in die Nabe 52 geführt ist (Fig. 13).

Alle Gleit- und Führungsbahnen 60 unterhalb der wulstartigen Ansätze 55 sind so ausgebildet und angeordnet, daß ihre Einführöffnungen 56 dem jeweils vorangehenden Endbereich 56a zugekehrt sind.

Jeder wulstartige Ansatz 55 ist vorteilhafterweise in seinem oberen Bereich mit einer Abflachung 55a versehen, um das Aufsetzen des Sicherungsringes 150 zu erleichtern.

Die Nabe 52 der Befestigungsscheibe 50 dient zur Aufnahme der Tragscheibe 20 mit den Tragarmen 40 der Gleitschutzvorrichtung 10 und zur Aufnahme des Sicherungsringes 150.

Die Sicherung der auf die Befestigungsscheibe 50 aufgesetzten Tragscheibe 20 der Gleitschutzvorrichtung 10 erfolgt mittels des Sicherungsringes 150. Dieser Sicherungsring 150 mit einem Außendurchmesser, der etwas geringer ist als der Durchmesser der Befestigungsscheibe 50 bzw. gleich dem Durchmesser dieser Befestigungsscheibe ist, weist an seiner Innenwandfläche 150a eine Anzahl von Verriegelungsstegen 155 auf, deren Anzahl der Anzahl der wulstartigen Ansätze 55 bzw. der Anzahl der Gleit- und Führungsbahnen 60 an der Nabe 52 der Befestigungsscheibe 50 entspricht. Diese Verriegelungsstege 155 sind so ausgebildet, daß sie in die Gleit- und Führungsbahnen 60 so einführbar sind, daß eine bajonettartige Verriegelung zwischen dem Sicherungsring 150 und der Nabe 52 bzw. der Befestigungsscheibe 50 erfolgt (Fig. 17).

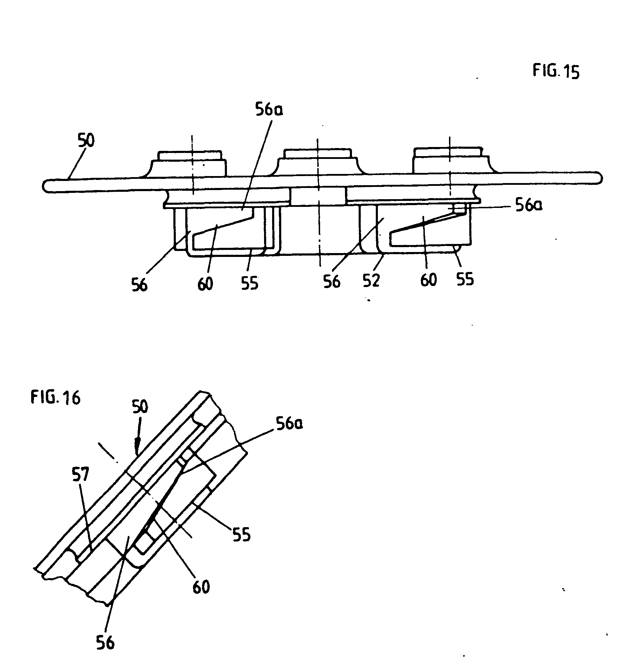

Die Verriegelungsstege 155 sind hiernach keilförmig ausgebildet, so daß bei auf die Befestigungsscheibe 50 aufgesetztem Sicherungsring 150 die konisch verjüngt auslaufenden Endabschnitte eines jeden Verriegelungssteges 155 der Einführöffnung 56 der die Gleit- und Führungsbahnen bildenden Ausnehmung zwischen dem wulstartigen Ansatz 55 und der Ringwulst 57 zugekehrt ist, so daß bei einem Verdrehen des Sicherungsringes 150 um seine senkrechte Mittelachse in Pfeilrichtung X die Verriegelungsstege 155 in die Gleit- und Führungsbahnen 60 eingeführt werden und somit die bajonettverschlußartige Verriegelung erzielt wird (Fig. 16 und 17).

Um den Sicherungsring 150 auf die Nabe 52 der Befestigungsscheibe 50 so aufsetzen zu können, daß die Verriegelungsstege 155 des Sicherungsringes 150 in die Gleit- und Führungsbahnen 60 eingeführt werden können, weisen die Verriegelungsstege 155 eine Länge auf, die dem Abstand zwischen zwei wulstartigen Ansätzen 55 an der Befestigungsscheibe 50 entspricht. Auf diese Weise sind die Verriegelungsstege 155 in der Aufsetzstellung des Sicherungsringes 150 zwischen je zwei wulstartigen Ansätzen 55 hindurchführbar, bis der Sicherungsring 150 auf der Ringwulst 57 zu liegen kommt und die Verriegelungsstege 155 in die die Gleit- und Führungsbahnen 60 bildenden Ausnehmungen einführbar sind.

Um ein selbsttätiges Lösen des Sicherungsringes 150 von der Nabe 52 bzw. der Befestigungsscheibe 50 zu vermeiden, ist der Sicherungsring 150 mit zusätzlichen Arretierungseinrichtungen versehen. Diese Arretierungseinrichtungen sind als blattfederartige Schnäpper 160 ausgebildet, und zwar in Form von federnd-elastischen Zungen, die in Ausnehmungen 156 an der Innenwandfläche 150a des Sicherungsringes 150 angeordnet sind. Die Anordnung und Ausbildung dieser blattfederartigen Schnäpper 160 ist derart, daß bei auf die Nabe 52 der Befestigungsscheibe 50 aufgesetztem Sicherungsring 150, jedoch noch in unverriegelter Stellung, die blattfederartigen Schnäpper 160 von den wulstartigen Ansätzen 55 an der Nabe 52 in ihre Ausnehmungen 156 an der Innenwandfläche 150a des Sicherungsringes 150 gedrückt werden. Erfolgt die Verriegelung des Sicherungsringes 150 indem dieser verdreht wird, dann kommen die blattfederartigen Schnäpper 160 im Bereich von Ausnehmungen 152 zu liegen, die am Umfang der Nabe 52 ausgebildet sind. Da die blattfederartigen Schnäpper 160 das Bestreben haben, aus ihren Ausnehmungen 156 in Pfeilrichtung XI selbsttätig zu federn, kommen die blattfederartigen Schnäpper 160 in den Ausnehmungen 152 an der Nabe 52 zu liegen und bilden dort die Verriegelung insofern, als die freien Enden der blattfederartigen Schnäpper 160 an Anschlägen 153 zu liegen kommen, die die Ausnehmung 152 in der Nabe 52 begrenzen. Die in diesen Ausnehmungen mit den Anschlägen 153 eingreifenden freien Enden der blattfederartigen Schnäpper 160 verhindern somit, daß der Sicherungsring 150 entgegen seiner Drehrichtung zum Verriegeln sich löst und sich von der Nabe 52 abheben kann.

Die Anzahl der blattfederartigen Schnäpper 160 an der Innenwandfläche 150a des Sicherungsringes 150 kann beliebig gewählt sein. Bei dem in Fig. 17 gezeigten Ausführungsbeispiel sind zwei blattfederartige Schnäpper 160 vorgesehen, die im gleichen Abstand voneinander an der Innenwandfläche 150a des Sicherungsringes 150 vorgesehen sind. Die Anzahl der Ausnehmungen 152 im Umfang der Nabe 52 der Befestigungsscheibe 50 entspricht dabei der Anzahl der blattfederartigen Schnäpper 160.

Die blattfederartigen Schnäpper 160 sind bei der Herstellung des Sicherungsringes 150 gleichzeitig mit ausgeformt. Der Sicherungsring 150 besteht aus Kunststoffen mit einem federnd-elastischen Verhalten im Falle zungenförmiger Ausgestaltung, wie dies auf die blattfederartigen Schnäpper 160 zutrifft.

Anstelle von blattfederartigen Schnäppern 160 können auch andersartig ausgebildete Verriegelungseinrichtungen zur Anwendung gelangen. So besteht beispielsweise die Möglichkeit, radial verschiebbare oder federbeaufschlagte Bolzen zu verwenden, die in entsprechende Ausnehmungen am Umfang der Nabe 52 der Befestigungsscheibe 50 eingreifen, wobei jedoch dann entsprechende Vorkehrungen getroffen sein müssen, um ein Entriegeln insofern zu bewirken, als die Verriegelungsbolzen in ihre Ausgangsstellung zurückgezogen werden müssen, um den Sicherungsring 150 von der Befestigungsscheibe 50 abnehmen zu können.

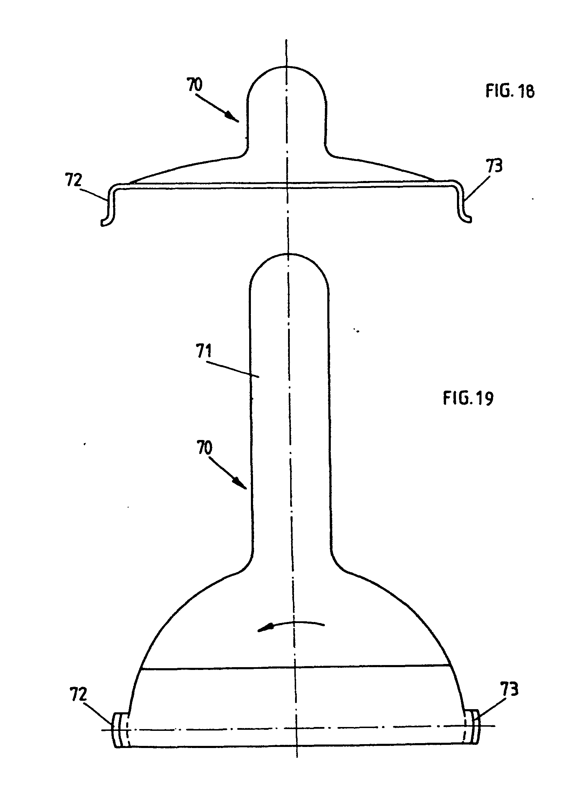

Um den Sicherungsring 150 von der Befestigungsscheibe 50 abnehmen zu können, ist es erforderlich, die blattefederartigen Schnäpper 160 aus ihrer Verriegelungsstellung in ihre Ausgangsstellung in den Ausnehmungen 156 an der Innenwandfläche 150a des Sicherungsringes 150 zu überführen. Hierfür ist der in Fig. 18 und 19 dargestellte Entriegelungsschlüssel 70 vorgesehen, der aus einer griffartigen Handhabe 71 besteht, die an ihrem einen freien Ende zwei in einem Abstand voneinander angeordnete Druckzungen 72, 73 trägt, die etwa senkrecht stehend zur griffartigen Handhabe 71 angeordnet sind. Der Abstand zwischen diesen beiden Druckzungen 72, 73 entspricht dem Abstand der sich gegenüberliegenden blattfederartigen Schnäpper 160, so daß die Druckzungen 72, 73 in die beiden Ausnehmungen 152 an der Nabe 52 einführbar sind. Hierfür weisen entsprechend Fig. 7 die beiden Ausnehmungen 152 an der Nabe 52 zusätzliche Ausnehmungen 75 auf, in die die beiden Druckzungen 72, 73 des Entriegelungsschlüssels 70 einführbar sind.

Sind die Druckzungen 72, 73 des Entriegelungsschlüssels 70 in diese Ausnehmungen 75 eingeführt und wird der Entriegelungsschlüssel 70 in Pfeilrichtung X2 (Fig. 17) verschwenkt, dann werden die beiden blattfederartigen Schnäpper 160, die in den Ausnehmungen 152 der Nabe 52 zu liegen kommen, aus diesen Ausnehmungen 152 herausgedrückt und in die Ausnehmungen 156 an der Innenwandfläche 150a des Sicherungsringes 150 bewegt. Dabei werden die blattfederartigen Schnäpper 160 so weit in ihre Ausnehmungen 156 eingeführt, daß im Endbereich der Bewegungsbahn der beiden Druckzungen 72, 73 ein Anschlag 76 freigegeben wird, an dem die beiden Druckzungen 72, 73 zur Anlage gebracht werden. Sind die Druckzungen 72, 73 an diesen Anschlägen 76 zur Anlage gebracht und wird der Entriegelungsschlüssel 70 weiter in Pfeilrichtung X2 verdreht, dann nehmen die Druckzungen 72, 73 den Sicherungsring 150 mit und führen bei weiterer Drehbewegung die Verriegelungsstege 155 aus den Gleit- und Führungsbahnen 60 der Befestigungsscheibe 50 heraus bis die Verriegelungsstege 155 zwischen den wulstartigen Ansätzen 55 zu liegen kommen, so daß in dieser Stellung dann der Sicherungsring 150 von der Nabe 52 abgenommen werden kann.

Auch das Aufsetzen des Sicherungsringes 150 auf die Nabe 52 erfolgt mittels des Entriegelungsschlüssels 70 in der Weise, daß die Druckzungen 72, 73 des Entriegelungsschlüssels 70 in die Ausnehmungen 75 eingeführt werden und bei einem Verdrehen des Entriegelungsschlüssels 70 in Pfeilrichtung X (Fig. 17) nehmen die Druckzungen 72, 73 den Sicherungsring 150 solange mit, bis die Verriegelungsstege 155 in den Gleit- und Führungsbahnen 60 zu liegen kommen und der Bajonettverschluß hergestellt ist. Für das Mitnehmen des Sicherungsringes 150 durch die Druckzungen 72, 73 des Entriegelungsschlüssels 70 weisen die Ausnehmungen 75 im Befestigungsbereich der blattfederartigen Schnäpper 160 Anschläge 78 auf (Fig. 17).

Wie Fig. 11 zeigt, weist die Befestigungsscheibe 50 auf ihrer der Nabe 52 abgekehrten Wandfläche 40a im Bereich der Felgenschraubenbzw. Radbolzen-Durchbrechungen 51 Abstandsringe 80 auf, die als austauschbare Adapter ausgebildet sind. Dadurch ist die Möglichkeit gegeben, durch Abstandsringe 80 unterschiedlicher Größen die Befestigungseinrichtung unterschiedlichen Reifengrößen anpassen zu können.

Die Befestigung der Gleitschutzvorrichtung 10, bestehend aus der Tragscheibe 20 mit den Tragarmen 40 und dem an diesen befestigten Kettennetz der Schneekette 200, an der Felge bzw. dem Rad 11 eines Fahrzeuges unter Verwendung der Befestigungseinrichtung, bestehend aus der Befestigungsscheibe 50 und dem Sicherungsring 150, erfolgt in der Weise, daß nach dem Befestigen der Befestigungsscheibe 50 mittels der Felgenschrauben, Radbolzen od.dgl. 18 an der Radfelge 11 die Tragscheibe der Gleitschutzvorrichtung 10 auf die Nabe 52 der Befestigungsscheibe 50 aufgesetzt wird. Hierauf wird dann der Sicherungsring 150 aufgesetzt, so daß seine Verriegelungsstege 155 in den Zwischenräumen zwischen den wulstartigen Ansätzen 55 an der Nabe 52 zu liegen kommen. Es erfolgt dann das Einführen der Druckzungen 72, 73 des Entriegelungsschlüssels 70 in die Ausnehmungen 75 und anschließendes Verschwenken des Entriegelungsschlüssels 70 in Pfeilrichtung X (Fig. 15), wodurch der Sicherungsring 150 um seine senkrechte Mittelachse verschwenkt wird, bis die Verriegelungsstege 155 an der Innenwandfläche 150a des Sicherungsringes 150 in den die Gleit- und Führungsbahnen 60 bildenden Ausnehmungen zu liegen kommen. Gleichzeitig rasten selbstfedernd die blattfederartigen Schnäpper 160 in die Ausnehmungen 152 an der Nabe 52 ein, wodurch die Verriegelung gegen ein unbeabsichtigtes Lösen des Sicherungsringes 150 erfolgt. Dadurch, daß die freien Enden der blattfederartigen Schnäpper 160 in anschlagartigen Ausnehmungen 153 zu liegen kommen, ist eine sichere Verriegelung gewährleistet. Dadurch, daß diese Anschlagausnehmungen 153 hinterschnitten ausgebildet sind und die freien Enden der blattfederartigen Schnäpper 160 eine etwa keilförmige Ausgestaltung aufweisen, ist gewährleistet, daß die blattfederartigen Schnäpper 160 mit ihren freien Enden aus diesen Anschlagausnehmungen 153 nicht herausfedern können.

Auf diese Weise ist die Gleitschutzvorrichtung 10 mittels der Befestigungseinrichtung aus der Befestigungsscheibe 50 und dem Sicherungsring 150 an der Felge 11 des Fahrzeugrades so gehalten, daß die Tragarme 40 mit der Schneekette 200 der Gleitschutzvorrichtung 10 die Reifenlauffläche übergreifen (Fig. 1 und 5).

Das Abnehmen der Gleitschutzvorrichtung 10 erfolgt unter Zuhilfenahme des Entriegelungsschlüssels 70, der hierzu in die Ausnehmungen 75 mit seinen Druckzungen 72, 73 eingeführt wird. Durch Verschwenken des Entriegelungsschlüssels 70 werden die blattfederartigen Schnäpper 160 aus ihrer Verriegelungsstellung in ihre Ausgangsstellung in den Ausnehmungen 156 an der Innenwandfläche 150a des Sicherungsringes 150 bewegt. Gleichzeitig erfolgt ein Verdrehen des Sicherungsringes 150 soweit, bis die Verriegelungsstege 155 des Sicherungsringes 150 aus den Gleit- und Führungsbahnen 60 an der Nabe 52 herausgeführt sind. Der Sicherungsring 150 kann dann abgehoben werden. Es erfolgt dann ein Abziehen der Tragscheibe 20 der Gleitschutzvorrichtung 10 von der Nabe 52 der Befestigungsscheibe 50. Bei weiterem Nichtgebrauch der Gleitschutzvorrichtung 10, jedoch bei einer Bereithaltung der Befestigungseinrichtung, wird lediglich auf die Befestigungsscheibe 50 der Sicherungsring 150 aufgesetzt und verriegelt, so daß jederzeit die Möglichkeit besteht, die Gleitschutzvorrichtung 10 anzubringen, falls dies erforderlich werden sollte.

Die Tragscheibe 20 der Gleitschutzvorrichtung 10 ist mit einer mittigen Durchbrechung versehen, damit die Tragscheibe 20 auf die Nabe 52 der Befestigungsscheibe 50 aufsetzbar ist. Der Durchmesser dieser mittigen Durchbrechung ist jedoch größer als der Durchmesser der Nabe 52, so daß die auf der Nabe 52 gehaltene Tragscheibe 20 der Gleitschutzvorrichtung 10 exzentrische Bewegungen durchführen kann. Auf diese Weise ist es möglich, daß die die Reifenlauffläche umgreifenden Tragarme 40 in Verbindung mit der Tragscheibe 20 den Walkbewegungen des abrollenden Reifens sich anpassen können. In gleicher Weise paßt sich dabei auch das Kettennetz der Schneekette 200 der Gleitschutzvorrichtung den Walkbewegungen des abrollenden Reifens an, da das Kettennetz von den Tragarmen 40 getragen und im Bereich der Lauffläche des Reifens gehalten wird. Außerdem ist der Durchmesser der mittigen Durchbrechung in der Tragscheibe 20 so bemessen, daß die Tragscheibe 20 über die Ringwulst 57 an der Nabe 52 führbar ist. Die Absicherung der Tragscheibe 20 nach oben erfolgt mittels des die Tragscheibe abschnittsweise übergreifenden Sicherungsringes 150, während die Sicherung zur Felge hin durch die Befestigungsscheibe 50 selbst erfolgt.

Wie die Fig. 2, 3 und 4 zeigen, ist jeder Tragarm 40 der Gleitschutzvorrichtung 10 mit einer Anzahl von quer zur Tragarmlängsrichtung verlaufenden Verschleißschutzleisten 270 versehen, die in einem Abstand voneinander auf dem Tragarm 40 angeordnet sind. Diese Verschleißschutzleisten bestehen aus metallischen oder anderen verschleißfesten Werkstoffen und sind fest mit dem Tragarm 40 verbunden, wobei für die Befestigung der Verschleißschutzleisten 270 jeder Tragarm 40 im Anbringungsbereich der Verschleißschutzleisten 270 mit einer rillenförmigen Ausnehmung versehen sein kann, in der dann unter Preßsitz die z.B. ringförmig ausgebildeten Verschleißschutzleisten 270 gehalten sind. Vorteilhaft ist es, wenn die Verschleißschutzleisten 270 auf ihrer der Reifenlauffläche abgewandten Seite stegartig, d.h. erhaben, ausgebildet sind, während dagegen auf der der Reifenlauffläche zugekehrten Seite der entsprechende Abschnitt der Verschleißschutzleisten in das Material des Tragarmes 40 integriert sein sollte, um einen bündigen Abschluß zur Tragarmfläche zu erreichen. Zur Erhöhung der Griffigkeit kann darüber hinaus jeder Tragarm 40 auch mit einer Verschleißschutzleiste versehen sein, die in Tragarmlängsrichtung verlaufend ist.

Bei dem in Fig. 17 gezeigten Ausführungsbeispiel sind zwei Ausnehmungen 156 an der Innenwandfläche 150a des Sicherungsringes 150 vorgesehen, in die eine der Anzahl der Ausnehmungen entsprechende Anzahl von blattfederartigen Schnäppern 160 eingreift. Die Anzahl der Ausnehmungen 156 ist jedoch nicht beschränkt auf zwei Ausnehmungen. So besteht auch die Möglichkeit, fünf Ausnehmungen 156 vorzusehen, falls diese Anzahl erforderlich sein sollte. In jede Ausnehmung greift dann ein Schnäpper 160, so daß bei fünf Ausnehmungen auch die gleiche Anzahl von Schnäppern 160 vorgesehen ist. In diesem Fall der Ausbildung muß der Entriegelungsschlüssel 70 auch eine entsprechende Anzahl von Druckzungen aufweisen, um die Schnäpper 160 aus den Ausnehmungen herausdrücken zu können, um ein Aufsetzen des Sicherungsringes 150 auf die Nabe 52 und um ein Entriegeln zu ermöglichen.

**Patentansprüche**

1. Gleitschutzvorrichtung, insbesondere für luftbereifte Fahrzeugräder auf Schnee- und Eisflächen, die aus einer an der Radscheibe bzw. Felge befestigten Befestigungsscheibe (50) und aus einer mit der Befestigungsscheibe (50) lösbar verbundenen, mit einer mittigen Durchbrechung versehenen Tragscheibe (20) mit einer Anzahl von mehreren, in gleichem Abstand voneinander radial verlaufenden Tragarmen (40) aus einem vorgebogenen, die Reifenlauffläche übergreifenden Profil aus einem Kunststoff oder einem anderen geeigneten Werkstoff, besteht, dadurch gekennzeichnet, daß an den Tragarmen (40) eine zwischen diesen eingehängte und von diesen gehaltene Schneekette (200) befestigt ist, die als Kettennetz mit bis in den seitlichen Reifenwandbereich geführten Kettenabschnitten (202, 203) ausgebildet ist, wobei die Kette (201) des Kettennetzes im Bereich zwischen zwei Tragarmen (40) unter Ausbildung einer Radeingriffs- bzw. Montageöffnung (210) bis an die Tragscheibe (20) geführt und im Anschlußbereich der Tragarme (40) an der Tragscheibe (20) an den Tragarmen (40) gehalten ist, und daß die Radeingriffsöffnung (210) zwischen zwei Tragarmen (40) mittels eines Kettenabschnittes (201a) verschließbar ist.

2. Gleitschutzvorrichtung nach Anspruch 1, dadurch gekennzeichnet, daß die an den freien Enden der Tragarme (40) befestigte äußere Kette (201) der Schneekette (200) im Bereich zwischen zwei Tragarmen (40) zur Ausbildung einer Radeingriffsöffnung (210) unterbrochen ausgebildet ist, so daß das eine Ende (201b) der Kette (201) an dem einen der beiden die Radeingriffsöffnung (210) begrenzenden Tragarme (40) befestigt ist, während das an dem anderen Tragarm (40) befestigte Ende (201c) der Kette (201) verlängert ausgebildet ist, wobei der verlängerte Kettenabschnitt (211) eine Länge aufweist, die größer ist als die Länge von zwei Tragarmen (40) und dem Abstand zwischen zwei Tragarmen, und durch eine Durchlauföse (212) an dem Ende (201b) der Kette (201) hindurchgeführt ist, und daß an der Tragscheibe (20) benachbart zu einem der beiden die Radeingriffsöffnung (210) begrenzenden Tragarme (40) eine Befestigungseinrichtung (215), wie Haken od.dgl., zum Einhaken des freien Endes (211a) des verlängerten Kettenabschnittes (211) der Kette (201) vorgesehen ist.

3. Gleitschutzvorrichtung nach Anspruch 1 und 2, dadurch gekennzeichnet, daß die Kette (201) der Schneekette (200) im Bereich zweier, die Radeingriffsöffnung (210) seitlich begrenzenden Tragarme (40) unterbrochen ausgebildet und mit ihren freien Enden (201b, 201c) an den freien Enden (40a) der Tragarme (40) bei (40c) befestigt ist, daß die beiden die Radeingriffsöffnung (210) seitlich begrenzenden Tragarme (40) an ihren einander gegenüberliegenden Längskanten (40b) je einen mit seinen Enden (220a, 220b) im oberen und im unteren Bereich des Tragarmes (40) bei (40d, 40e) an diesem befestigten Bügel (220) tragen, der vom oberen freien Ende (40a) des Tragarmes (40) zu dem der Tragscheibe (20) zugekehrten unteren Ende (40a') des Tragarmes (40) konisch sich verjüngend ausgebildet ist, wobei jeder Bügel (220) im oberen Bereich einen ösenförmig ausgebildeten Abschnitt (220c) aufweist, wobei die ösenförmig ausgebildeten Abschnitte (220c) der beiden Bügel (220) sich gegenüberliegend sind, und daß auf den beiden Bügeln (220) eine Kette (225) in Tragarmlängsrichtung verschieblich gehalten ist, durch deren Endkettenglieder (225a, 225b) die beiden Bügel (220) an den beiden Tragarmen (40) hindurchgeführt sind, wobei die Kette (225) eine Länge aufwest, die in etwa dem Abstand der beiden Tragarme (40) in deren unteren Bereichen entspricht.

4. Gleitschutzvorrichtung nach einem der Ansprüche 1 bis 3, dadurch gekennzeichnet, daß die gegenüber dem von den freien Enden (40a) der Tragarme (40) gebildeten Umfang eine größere Länge aufweisende äußere Kette (201) der Schneekette (200) an ihrem Ende (201b) an dem freien Ende (40a) eines der beiden die Radeingriffsöffnung (210) begrenzenden Tragarme (40) befestigt ist, wobei der das Kettenende (201b) tragende Tragarm (40) einen ösenförmigen Durchlaufbeschlag (212) aufweist, daß die Kette (201) mit ihrem anderen verlängerten Ende (201c) durch den Durchlaufbeschlag (212) hindurchgeführt und mit ihrem Ende des verlängerten Kettenabschnittes (211) mittels einer in an sich bekannter Weise ausgebildeten Befestigungseinrichtung (215a) wie Spannhaken, Kniehebelverschluß, Curryklemme, Kammklemme od.dgl. an der Tragscheibe (20) befestigbar ist.

5. Gleitschutzvorrichtung nach Anspruch 4, dadurch gekennzeichnet, daß zum Spannen der äußeren Kette (201, 211) das freie Ende (211a) des verlängerten Kettenabschnittes (211) der äußeren Kette (201) mit einem Federelement (240), wie Schraubenfeder, Gummiband od.dgt., verbunden ist, das über an der Tragscheibe (20) befestigte oder angeformte, auf einer Kreislinie angeordnete Führungen (241) geführt und mit seinem freien Ende (240a) an der Tragscheibe (20) befestigt ist.

6. Gleitschutzvorrichtung nach Anspruch 1 bis 5, dadurch gekennzeichnet, daß jeder Tragarm (40) an seinem freien Ende (40a) eine Ringnut (140) zur Aufnahme und Halterung des ringförmigen Gliedes der Kette (201) der Schneekette (200) aufweist.

7. Gleitschutzvorrichtung nach Anspruch 1 bis 5, dadurch gekennzeichnet, daß jeder Tragarm (40) benachbart zu seinem freien Ende (40a) im Bereich seiner beiden Längskanten (40b) Ausnehmungen (141) zur Aufnahme und Halterung des ringförmigen Gliedes der Kette (201) der Schneekette (200) aufweist.

8. Gleitschutzvorrichtung nach Anspruch 1 bis 7, dadurch gekennzeichnet, daß die Tragarme (40) lös- und austauschbar an der Tragscheibe (20) befestigt sind.

9. Gleitschutzvorrichtung nach Anspruch 1 bis 8, dadurch gekennzeichnet, daß jeder Tragarm (40) in Richtung zur Tragscheibe (20) biegbar oder verschwenkbar ist.

10. Gleitschutzvorrichtung nach Anspruch 9, dadurch gekennzeichnet, daß jeder Tragarm (40) benachbart zu seinem Befestigungsbereich an der Tragscheibe (20) zur Ausbildung eines Bandscharnieres (260) einen außenseitig mit Einkerbungen od.dgl. (261) versehenen Abschnitt aufweist.

11. Gleitschutzvorrichtung nach Anspruch 9, dadurch gekennzeichnet, daß jeder Tragarm (40) in die Tragscheibe (20) einsteckbar und an dieser dreh- und schwenkbar angeordnet ist.

12. Gleitschutzvorrichtung nach Anspruch 9, dadurch gekennzeichnet, daß jeder Tragarm (40) an der Tragscheibe (20) angelenkt und auf die Tragscheibe (20) klappbar ist, wobei in ausgeklappter Stellung der Tragarm (40) mittels einer Feststelleinrichtung, wie Verriegelungsbolzen od.dgl., arretierbar ist.

13. Gleitschutzvorrichtung nach Anspruch 1 bis 12, dadurch gekennzeichnet, daß jeder Tragarm (40) eine Anzahl von quer zur Tragarmlängsrichtung verlaufende und im Abstand voneinander angeordnete Verschleißschutzleisten (270) aus metallischen oder anderen verschleißfesten Werkstoffen aufweist.

14. Gleitschutzvorrichtung nach Anspruch 1 bis 12, dadurch gekennzeichnet, daß jeder Tragarm (40) auf seiner Außenseite mindestens eine in Tragarmlängsrichtung verlaufend Verschleißschutzleiste aus metallischen oder anderen verschleißfesten Werkstoffen aufweist.

15. Gleitschutzvorrichtung nach Anspruch 1 bis 14, dadurch gekennzeichnet, daß die Tragarme (40) an der Tragscheibe (20) fest oder um parallel zur Radscheibenlagerachse verlaufende Achsen (41) in einem kleinen Bereich verschwenkbar angeordnet sind.

16. Gleitschutzvorrichtung nach Anspruch 1 bis 15, dadurch gekennzeichnet, daß die Tragarme (40) außenseitig an ihren die Reifenlauffläche übergreifenden Endabschnitten ein Greifprofil oder Spikes tragen.

17. Gleitschutzvorrichtung nach Anspruch 1 bis 16, dadurch gekennzeichnet, daß jeder Tragarm (40) aus einem ein Rückstellvermögen aufweisenden Kunststoff besteht.

18. Gleitschutzvorrichtung nach Anspruch 1 bis 17, dadurch gekennzeichnet, daß zur Befestigung der Tragscheibe (20) an der Radscheibe bzw. Felge (11) eine kreisförmige Befestigungsscheibe (50) mit einer Anzahl von Durchbrechungen (51) für die Fetgenschrauben, Radbolzen od.dgl. (18) vorgesehen ist, die zentrisch eine kreisförmige, gegenüber dem Durchmesser der Befestigungsscheibe (50) einen kleineren Durchmesser aufweisende Nabe (52) trägt, die in einem Abstand von der Befestigungsscheibe (50) benachbart zu ihrem oberen Rand (53) an ihrem Umfang eine Anzahl von wulstartigen Ansätzen (55) mit unterhalb diesen ausgebildeten, sich konisch von Einführöffnungen (56) verjüngenden, in Nabenumfangrichtung verlaufenden Gleit- und Führungsbahnen (60) aufweist und die die Nabe (52) umschließende Tragscheibe (20) mit den Tragarmen (40) trägt, die mittels eines auf die Nabe (52) aufgesetzten Sicherungsringes (150) gesichert ist, der in die Gleit- und Führungsbahnen (60) an der Nabe (52) einführbare, eine bajonettartige Verriegelung bewirkende Verriegelungsstege (155) mit sich zu den Einführöffnungen (56) hin erstreckenden, konisch sich verjüngenden Abschnitten und an seiner Innenwandfläche (150a) mindestens einen blattfederartigen Schnäpper (160) aufweist, der in verriegelter Stellung des Sicherungsringes (150) an der Befestigungsscheibe (50) in eine Ausnehmung (152) am Umfang der Nabe (52) eingreift und sich an einem Anschlag (153) gegen ungewolltes Entriegeln abstützt und mittels eines Entriegelungsschlüssels (70) aus der Verriegelungsstellung in eine Entriegelungsstellung überführbar ist, wobei die Tragscheibe (20) mit den Tragarmen (40) mit Spiel auf der Nabe (52) der Befestigungsscheibe (50) zur Durchführung exzentrischer Umlaufbewegungen angeordnet ist.

19. Gleitschutzvorrichtung nach Anspruch 18, dadurch gekennzeichnet, daß an dem Umfang der Nabe (52) der Befestigungsscheibe (50) vier im gleichen Abstand voneinander angeformte, wulstartige Ansätze (55) mit Einführöffnungen (56) vorgesehen sind, und daß an der Innenwandfläche (150a) des Sicherungsringes (150) eine der Anzahl der wulstartigen Ansätze (55) entsprechende Anzahl von im gleichen Abstand voneinander angeordneten Verriegelungsstegen (155) angeformt ist.

20. Gleitschutzvorrichtung nach Anspruch 18 und 19, dadurch gekennzeichnet, daß der Sicherungsring (150) an seiner Innenwandfläche (150a) zwei im gleichen Abstand voneinander angeordnete, blattfederartige Schnäpper (160) aufweist, die in der Verriegetungsstellung selbsttätig in eine der Anzahl der Schnäpper (160) entsprechende Anzahl von Ausnehmungen (152) einschwenkbar und bei äußerer Druckeinwirkung in Ausnehmungen (156) in der Innenwandfläche (150a) des Sicherungsringes (150) zur Entriegelung rückführbar sind.

21. Gleitschutzvorrichtung nach Anspruch 18 bis 20, dadurch gekennzeichnet, daß der Entriegelungsschlüssel (70) zum Entriegeln der blattfederartigen Schnäpper (160) aus einer griffartigen Handhabe (71) besteht, die an ihrem einen freien Ende zwei in einem Abstand voneinander angeordnete Druckzungen (72, 73) trägt, die senkrecht stehend zur griffartigen Handhabe (71) angeordnet sind und deren Abstand voneinander dem Abstand der sich gegenüberliegenden blattfederartigen Schnäpper (160) entspricht.

22. Gleitschutzvorrichtung nach Anspruch 18 bis 21, dadurch gekennzeichnet, daß die Befestigungsscheibe (50) auf ihrer der Nabe (52) abgekehrten Wandfläche (50a) im Bereich der Felgenschrauben- bzw. Radbolzen-Durchbrechungen (51) als Abstandsringe (80) ausgebildete, austauschbare Adapter aufweist.

23. Gleitschutzvorrichtung nach Anspruch 18 bis 22, dadurch gekennzeichnet, daß die Felgenschrauben bzw. Radbolzen (18) zur Befestigung der Befestigungsscheibe (50) Bohrungen mit Innengewinde zur Aufnahme von Sicherungsschrauben (85) aufweisen.

24. Gleitschutzvorrichtung nach Anspruch 18 bis 23, dadurch gekennzeichnet, daß die Länge eines Verriegelungssteges (155) des Sicherungsringes (150) etwa dem Abstand zwischen zwei wulstartigen Ansätzen (55) an der Nabe (52) der Befestigungsscheibe (50) entspricht.

25. Gleitschutzvorrichtung nach Anspruch 1 bis 24, dadurch gekennzeichnet, daß die Gleitschutzvorrichtung zur Befestigung der Tragscheibe (20) eine mit der Radscheibe bzw. Felge (11) verbundene Befestigungsscheibe (10) aufweist, die mit verriegelbaren Halterungen für die Tragscheibe (20) verbunden ist, und daß die Befestigungsscheibe (50) unlösbar mit der Radscheibe bzw. Felge (11) verbunden ist und einen Bestandteil des Rades bildet.

## Revendications

1. Dispositif antidérapant, notamment pour pneumatiques de véhicules sur sols enneigés ou verglas, qui est constitué par un disque de fixation (50) fixé au disque de roue ou à la jante et par un disque porteur (20), relié au disque de fixation (50) de manière amovible, dans lequel est ménagée une découpure centrale, avec plusieurs bras porteurs (40) allant dans le sens radial, à égale distance les uns des autres, constitués par un profilé précambré en matière plastique ou en un autre matériau approprié qui recouvre la chape du pneu, caractérisé en ce qu'une chaîne anti-neige (200), suspendue entre les bras porteurs (40) et maintenue par ceux-ci, est fixée aux bras porteurs (40), chaîne qui est formée comme un filet en chaîne avec des portions de chaîne (202, 203) guidées jusque dans la zone de la paroi latérale du pneu, la chaîne (201) du filet en chaîne étant guidée dans la zone entre deux bras porteurs (40) jusqu'au disque porteur (20) en formant une ouverture d'engrènement de la roue ou une ouverture de montage (210) et étant maintenue dans la zone de raccord des bras porteurs (40) au disque porteur (20) sur les bras porteurs (40) et que l'ouverture d'engrènement de la roue (210) entre deux bras porteurs (40) peut être fermée au moyen d'une portion de chaîne (201a).

2. Dispositif antidérapant selon la revendication 1, caractérisé en ce que la chaîne extérieure (201) de la chaîne anti-neige (200) qui est fixée aux extrémités libres des bras porteurs (40) est formée en étant interrompue dans la zone entre deux bras porteurs (40) pour former une ouverture d'engrènement de la roue (210) si bien que l'une des extrémités (201b) de la chaîne (201) est fixée à l'un des deux bras porteurs (40) délimitant l'ouverture d'engrènement de la roue (210), tandis que l'extrémité (201c) de la chaîne (201) qui est fixée à l'autre bras porteur (40) est formée en étant prolongée, la portion de chaîne prolongée (211) présentant une longueur supérieure à la longueur de deux bras porteurs (40) et à l'écart entre deux bras porteurs, et traverse un oeillet (212) à enfiler à l'estrémité (201b) de la chaîne (201), et qu'un dispositif de fixation (215), come un crochet ou équivalent, est prévu sur le disque porteur (20) au voisinage de l'un des deux bras porteurs (40) qui délimitent l'ouverture d'engrènement de la roue (210) pour accrocher l'extrémité libre (211a) de la portion prolongée (211) de la chaîne (201).

3. Dispositif antidérapant selon les revendications 1 et 2, caractérisé en ce que la chaîne (201) de la chaîne anti-neige (200) est formée en étant interrompue dans la zone de deux bras porteurs (40) délimitant latéralement l'ouverture d'engrènement de la roue (210) et qu'elle est fixée par ses extrémités libres (201b, 201c) aux extrémités libres (40a) des bras porteurs (40) en (40c), que les deux bras porteurs (40) qui délimitent latéralement l'ouverture d'engrènement de la roue (210) portent sur chacune de leurs arêtes longitudinales (40b) situées l'une en face de l'autre un étrier (220) fixé au bras porteur (40) par ses extrémités (220a, 220b) dans la zone supérieure et dans la zone inférieure du bras porteur (40) en (40d, 40e), étrier qui est formé en s'effilant de manière conique de l'extrémité libre supérieure (40a) du bras porteur (40) à l'extrémité inférieure (40a') du bras porteur (40) qui est tournée vers le disque porteur (20), chaque étrier (220) présentant dans la zone supérieure une portion (220c) configurée en forme d'oeillet, les portions configurées en forme d'oeillet (220c) des deux étriers (220) étant situées l'une en face de l'autre, et qu'une chaîne (225) est maintenue en étant translatable dans le sens longitudinal des bras porteurs sur les deux étriers (220), les deux étriers (220) sur les deux bras porteurs (40) traversant les maillons terminaux (225a, 225b) de la chaîne, la chaîne (255) présentant une longueur qui correspond approximativement à l'écart des deux bras porteurs (40) dans leurs zonnes inférieures.

4. Dispositif antidérapant selon l'une des revendications 1 à 3, caractérisé en ce que la chaîne extérieure (201) de la chaîne anti-neige (200), qui présente une longueur supérieure au périmètre formé par les extrémités libres (40a) des bras porteurs (40), est fixée à son extrémité libre (201b) à l'extrémité libre (40a) de l'un des deux bras porteurs (40) délimitant l'ouverture d'engrènement de la roue (210), le bras porteur (40) qui porte l'extrémité de la chaîne (201b) présentant une ferrure (212) à enfiler en forme d'oeillet (212), que la chaîne (201) traverse la ferrure (212) à enfiler avec son autre extrémité prolongée (201c) et qu'elle peut être fixée au disque porteur (20) par son extrémité de la portion prolongée de chaîne (211) au moyen d'un dispositif de fixation (215a) configuré de manière connue en soi, tel qu'un crochet de serrage, une fermeture à genouillère, un taquet coïnceur, une pince à peigne ou équivalent.

5. Dispositif antidérapant selon la revendication 4, caractérisé en ce que l'extrémité libre (211a) de la portion prolongée de chaîne (211) de la chaîne extérieure (201) est reliée à un élément à ressort (240), tel qu'un ressort à boudin, un élastique ou équivalent, pour tendre la chaîne extérieure (201, 211), élément à ressort qui est guidé par des guides (241) fixés ou moulés sur le disque porteur (20) qui sont disposés sur un cercle et qui est fixé au disque porteur (20) par son extrémité libre (240a).

6. Dispositif antidérapant selon les revendications 1 à 5, caractérisé en ce que chaque bras porteur (40) présente à son extrémité libre (40a) une rainure circulaire (140) pour le logement et la fixation du maillon annulaire de la chaîne (201) de la chaîne anti-neige.

7. Dispositif antidérapant selon les revendications 1 à 5, caractérisé en ce que chaque bras porteur (40) présente, au voisinage de son extrémité libre (40a) dans la zone de ses deux arêtes longitudinales (40b), des creux (141) pour le logement et la fixation du maillon annulaire de la chaîne (201) de la chaîne anti-neige (200).

8. Dispositif antidérapant selon les revendications 1 à 7, caractérisé en ce que les bras porteurs (40) sont fixés au disque porteur (20) en étant amovibles et remplaçables.

9. Dispositif anitdérapant selon la revendication 1 à 8, caractérisé en ce que chaque bras porteur (40) est flexible ou pivotant en direction du disque porteur (20).

10. Dispositif antidérapant selon la revendication 9, caractérisé en ce que chaque bras porteur (40) présente une portion pourvue d'entailles ou équivalent (261) sur sa face extérieure, au voisinage de sa zone de fixation au disque porteur (20), pour former une charnière en bande (260).

11. Dispositif antidérapant selon la revendication 9, caractérisé en ce que chaque bras porteur (40) peut être emboîté dans le disque porteur (20) et qu'il est disposé sur celui-ci de manière à être rotatif et pivotant.

12. Dispositif antidérapant selon la revendication 9, caractérisé en ce que chaque bras porteur (40) est articulé sur le disque porteur (20) et repliable sur le disque porteur (20), le bras porteur (40) pouvant, en position dépliée, être bloqué au moyen d'un dispositif de blocage, tel qu'un tourillon de verrouillage ou équivalent.

13. Dispositif antidérapant selon les revendications 1 à 12, caractérisé en ce que chaque bras porteur (40) présente un certain nombre de baguettes de' protection dusure (270) en matériaux métalliques ou en d'autres matériaux résistants à l'usure, disposées tranversalement par rapport au sens longitudinal des bras porteurs et espacées l'une de l'autre.

14. Dispositif antidérapant selon les revendications 1 à 12, caractérisé en ce que chaque bras porteur (40) présente, sur sa face extérieure, au moins une baguette de protection d'usure en matériaux métalliques ou en d'autres matériaux résistants à l'usure, disposée dans le sens longitudinal des bras porteurs.

15. Dispositif antidérapant selon les revendications 1 à 14, caractérisé en ce que les bras porteur's (40) sont disposés en étant fixes sur le disque porteur (20) ou en étant pivotants dans une petite zone autour d'axes (41) parallèles à l'axe du palier du disque de roue.

16. Dispositif antidérapant selon les revendications 1 à 15, caractérisé en ce que les bras porteurs (40) portent un profilé de prise ou des crampons sur leur face extérieure sur leurs portions terminales qui recouvrent la chape du pneu.

17. Dispositif antidérapant selon les revendications 1 à 16, caractérisé en ce que chaque bras porteur (40) est constitué par une matière synthétique ayant une reprise élastique.

18. Dispositif antidérapant selon les revendications 1 à 17, caractérisé en ce qu'un disque de fixation (50) circulaire avec un certain nombre de découpures (51) pour les vis de jante, pivots de roue ou équivalent (18) est prévu pour la fixation du disque porteur (20) sur le disque de roue ou la jante (11), disque de fixation qui porte en son centre un moyeu (52) circulaire qui présente un diamètre inférieur à celui du disque de fixation (50), moyeu qui présente un certain nombre d'éapulements en bourrelets (55) à une certaine distance du disque de fixation (50), au voisinage de son bord supérieur (53) à sa périphérie, avec des glissières et coulisses (60) configurées au-dessous de ces épaulements, s'effilant de manière conique à partir d'orifices d'entrée (56) et disposées dans le sens de la circonférence du moyeu et qui porte le disque porteur (20) avec les bras porteurs (40) qui entoure le moyeu (52), disque porteur (20) qui est bloqué par un circlip (150), monté sur le moyeu (52), qui présente des barrettes de verrouillage (155), qui peuvent être introduites dans les glissières et coulisses (60) du moyeu (52) et qui provoquent un verrouillage du type baïonnette avec des portions qui s'étendent vers les orifices d'entrée (56) et qui s'effilent de manière conique, et qui présente, sur la face de sa paroi intérieure (150a), au moins un cliquet (160) du type ressort à lames qui s'engrène, le circlip (150) étant en position verrouillée sur le disque de fixation (50), dans un creux (152) à la périphérie du moyeu (52), qui s'appuie sur une butée (153) contre un déblocage intempestif, et qui peut passer, au moyen d'une clé de déblocage (70) de la position bloquée à une position débloquée, le disque porteur (20) avec les bras porteurs (40) étant disposé en ayant du jeu sur le moyeu (52) du disque de fixation (50) pour effectuer des mouvements de rotation excentriques.

19. Dispositif antidérapant selon la revendication 18, caractérisé en ce que quatre épaulements en bourrelets (55), moulés à égale distance les uns des autres, avec des orifices d'entrée (56) sont prévus à la périphérie du moyeu (52) du disque de fixation (50) et qu'un certain nombre de barrettes de verrouillage (155), disposées à égale distances les unes des autres, qui correspond au nombre des épaulements en bourrelets (55), est moulé sur la face de la paroi intérieure (150a) du circlip (150).

20. Dispositif antidérapant selon les revendications 18 et 19, caractérisé en ce que le circlip (150) présente, sur la face de sa paroi intérieure (150a), deux cliquets (160) du type ressort à lames, disposés à égale distance l'un de l'autre, que l'on peut faire automatiquement pivoter, en position de blocage, dans un nombre de creux (152) correspondant au nombre des cliquets (160) et qui, lors d'un effet de pression extérieure, peuvent, pour le déblocage, retourner dans des creux (156) sur la face de la paroi intérieure (150a) du circlip (150).

21. Dispositif antidérapant selon les revendications 18 à 20, caractérisé en ce que la clé de déblocage (70) pour le déblocage des cliquets (160) du type ressort à lames est constituée par une manette (71) du type poignée qui porte, à l'une de ses extrémités libres, deux languettes de pression (72, 73) espacées l'une par rapport á l'autre, qui sont disposées perpendiculairement à la manette (71) du type poignée et dont l'écrat correspond à l'écart entre les cliquets (160) du type ressort à lames situés l'un en face de l'autre.

22. Dispositif antidérapant selon les revendications 18 à 21, caractérisé en ce que le disque de fixation (50) présente, dans la zone des découpures pour vis de jante et/ou pivots de roue (51), sur sa face de paroi (50a) détournée du moyeu (52), des adaptateurs remplaçables, configurés comme des bagues d'écartement (80).

23. Dispositif antidérapant selon les revendications 18 à 22, caractérisé en ce que les vis de jante ou pivots de roue (18) pour la fixation du disque de fixation (50) présentent des forures avec filet intérieur pour le logement des vis de blocage (85).

24. Dispositif antidérapant selon les revendications 18 à 23, caractérisé en ce que la longueur d'une barrette de verrouillage (155) du circlip (150) correspond approximativement à l'écart entre deux épaulements (55) en bourelets sur le moyeu (52) du disque de fixation (50).

25. Dispositif antidérapant selon les revendications 1 à 24, caractérisé en ce que le dispositif antidérapant présente un disque de fixation (10) relié au disque de roue ou à la jante (11) pour la fixation du disque porteur (20), disque de fixation qui est relié à des fixations pour le disque porteur (20) qui peuvent être bloquées et que le disque de fixation (50) est relié de manière indétachable au disque de roue ou à la jante (11) et qu'il constitue un élément de la roue.

**Claims**

1. Antislip device, especially for pneumatic vehicle tyres on snowy or icy surfaces which consists of a mounting disk (50) attached to the wheel disk or rim and of a supporting disk (20) releasably connected to the mounting disk (50) and provided with a central perforation with a plurality of supporting arms (40) extending radially and equidistantly spaced apart from each other of a prebent section fabricated from a plastic or some other suitable material which engages over the tyre tread, characterized in that, on the supoorting arms (40), a snow chain (200) is suspended between and retained by the latter, which is constructed in the form of a chain net with chain sections (202, 203) directed as far as into the lateral tyre wall area, the chain (201) of the chain net, within the area between two supporting arms (40) being directed as far as the supporting disk (20), while forming a wheel engagement to fitting aperture (210) and which, within the connection area of the supporting arms (40), is retained on the supporting disk (20) on the supporting arms (40), and in that the wheel engagement aperture (210) between two supporting arms (40) can be closed by means of a chain link (201a).

2. Antislip device according to Claim 1, characterized in that the outer chain (201) of the snow chain (200) attached to the free ends of the supporting arms (40) is, within the area between two supporting arms (40), is constructed so as to be intermittently open in order to form a wheel engagement aperture (210), so that the one end (201b) of the chain (201) is secured to one of the two supporting arms (40) delimiting the wheel engagement aperture (210), while the end (201c) of the chain (201) secured to the other supporting arm (40) is constructed so as to be extended, the extended chain section (211) having a length which is greater than the length of the two supporting arms (40) and the distance between two supporting arms, and is passed through a passage eyelet (212) on the end (201b) of the chain (201), and in that, on the supporting disk (20), adjacent to one of the two supporting arms (40) delimiting the wheel engagement aperture (210), a fastening means (215), such as hooks or the like, for hooking in the free end (211a) of the extended chain section (211) of the chain (201) is provided.

3. Antislip device according to Claims 1 and 2, characterized in that the chain (201) of the snow chain (200), within the area of two supporting arms (40) laterally delimiting the wheel engagement aperture (210), is constructed so as to be intermittently open and, with its free ends (201b, 201c), is secured to the free ends (40a) of the supporting arms (40) at (40c), in that the two supporting arms (40) laterally delimiting the wheel engagement aperture (210), on their oppositely located longitudinal edges (40b), each support one bracket (220) secured with its ends (220a, 220b) within the upper area and the lower area of the supporting arm (40) at (40d, 40e) on the same, which, from the upper free end (40a) of the supporting arm (40) towards the lower end (40), facing the supporting disk (20) of the supporting arm (40), is constructed so as to be conically tapering, in which each bracket (220), within the upper area, is provided with an eyelet-shaped section (220c), the sections (220c) constructed in an eyelet-like configuration of the two brackets (220) are located opposite each other, and in that, on the two brackets (220), a chain (225) is retained so as to be displaceable in the longitudinal direction of the supporting arm, through the terminal chain links of which (225a, 225b), the two brackets (220) on the two supporting arms (40) are passed, the chain (255) having a length that corresponds approximately to distance of the two supporting arms (40) from each other within their lower areas.

4. Antislip device according to any of the Claims 1 to 3, characterized in that the outer chain (201) of the snow chain (200), which has a greater length when compared with the circumference formed by the free ends (40a) of the supporting arms (40), at its end (201b), is secured to the free end (40a) of one of the two supporting arms (40) delimiting the wheel engagement aperture (210), in which the supporting arm (40) bearing the chain end (201b) is provided with an eyelet-shaped passage fitting (212) in that the chain (201), with its other extended end (201c), is passed through the passage fitting (212) and, with its end of the extended chain section (211), can, by means of a fastening device (215a) constructed in a known manner, such as a tenterhook, articulated lever fastener, curry clip, comb-type clip or the like, be secured to the supporting disk (20).

5. Antislip device according to Claim 4, characterized in that, for tensioning the outer chain (201, 211), the free end (211a) of the extended chain section (211) of the outer chain (201) is connected to a spring element (240), such as a helical spring, rubber band or the like, which is guided by means of guideways (241) attached to or formed on to the supporting disk (20) which are arranged on a circular line and is secured with its free end (240a) to the supporting disk (20).

6. Antislip device according to Claims 1 to 5, characterized in that each supporting arm (40), at its free end (40a), is provided with an annular groove (140) for accommodating and supporting the annular link of the chain (201) of the snow chain (200).

7. Antislip device according to Claims 1 to 5, characterized in that each supporting arm (40), adjacent to its free end (40a), within the area of its two longitudinal edges, is provided with recesses (141) for accommodating and supporting the annular link of the chain (201) of the snow chain (201).

8. Antislip device according to Claims 1 to 7, characterized in that the supporting arms (40) are releasably and interchangeably mounted on the supporting disk (20).

9. Antislip device according to Claims 1 to 8, characterized in that each supporting arm (40) is flexible or swivellable in the direction of the supporting disk (20).

10. Antislip device according to Claim 9, characterized in that each supporting arm (40), adjacent to its mounting area on the supporting disk (20), has a section fitted on the outside provided with notches or the like (261) for forming a strap hinge (260).

11. Antislip device according to Claim 9, characterized in that each supporting arm (40) can be inserted into the supporting disk (20) and is rotatably and swivellably disposed on the same.

12. Antislip device according to Claim 9 characterized in that each supporting arm (40) is hinged on to the supporting disk (20) and can be folded on to the supporting disk (20), the supporting arm (40), in the folded-out position, being blockable by means of a locking device, such as a locking bolt or the like.

13. Antislip device according to Claims 1 to 12, characterized in that each supporting arm (40) is fitted with a number of wear-reducing strips (270) extending transversally to the longitudinal direction of the supporting arm (40) and disposed so as to be spaced apart from each other and fabricated from metallic or other wear-resistant materials.

14. Antislip device according to Claims 1 to 12, characterized in that each supporting arm (40), on its exterior, is provided with at least one wear-reducing strip (270) extending in the longitudinal direction of the supporting arm and fabricated from metallic or other wear-resistant materials.

15. Antislip device according to Claims 1 to 14, characterized in that the supporting arms (40) are fixedly mounted on the supporting disk (20) so as to be swivellable within a small area about axes (41) extending parallel to the wheel disk bearing.

16. Antislip device according to Claims 1 to 15, characterized in that the supporting arms (40), on the outside, in their terminal sections engaging over the tyre tread, are fitted with a gripping tread or spikes.

17. Antislip device according to Claims 1 to 16, characterized in that each supporting arm (40) consists of a plastic material that possesses a capacity for elastic recovery.

18. Antislip device according to Claims 1 to 17, characterized in that, for mounting the supporting disk (20) to the wheel disk or rim (11), a circular mounting disk (50) with a number of perforations (51) for the rim bolts, wheel bolts or the like (18) is provided, which coaxially supports a circular hub (52), the diameter of which, in comparison with the diameter of the mounting disk (50), is smaller which, at a distance from the mounting disk (50), adjacent to its upper edge (53), on its periphery, is provided with a plurality of bead-like shoulders (55) with slideways and guideways (60) constructed below the latter, which taper conically from insertion apertures (56) and extend in the direction of the hub periphery and which carry the supporting disk (20) enclosing the hub (52) with the supporting arms (40), which is secured with the aid of a retaining ring (150) mounted on the hub (52), which is fitted with locking webs (155) bringing about a bayonet-like locking and which are insertable into the slideways and guideways (60) on the hub (52), said webs having sections that taper conically and extend towards the insertion apertures (56) and which, on its inner wall area (150a), is fitted with at least one leaf spring-like catch (160) which, in the locked position of the retaining ring (150) on the mounting disk (50), engages into a recess (152) on the periphery of the hub (52) and is supported on a stop (153) against inadvertent release and which, by means of a release key (70), can be transferred from the locking position into an unlocking position, the supporting disk (20) with the supporting arms (40) being arranged with play on the hub (52) of the mounting disk (50) so as to execute eccentric rotational movements.

19. Antislip device according to Claim 18, characterized in that, on the periphery of the hub (52) of the mounting disk (50), four equidistantly spaced-apart, formed-on, bead-like shoulders (55) with insertion apertures (56) are provided, and in that, on the inner wall area (150a) of the retaining ring (150), a number of locking webs (155) arranged so as to be equidistantly spaced apart is formed on, the number of which corresponds to the number of the bead-like shoulders (55).

20. Antislip device according to Claims 18 and 19, characterized in that the retaining ring (150), on its inner wall area (150a), is fitted with two equidistantly spaced apart leaf spring-like catches (160) which, in the locking position, can be automatically swivelled into a number of recesses (152) that corresponds to the number of the spring-loaded catches (160) and which, when acted upon by external pressure, can be returned into recesses (156) within the inner wall area (150a) of the retaining ring (150) for release.

21. Antislip device according to Claims 18 to 20, characterized in that the release key (70) for unlocking the leaf spring-like catches (160) consists of a grip-like handle (71) which, at its one free end, is provided with two spaced-apart pressure toes (72, 73) which are arranged so as to be vertical to the handle (71) and the distance of which from each other corresponds to the reciprocal distance of the oppositely located leaf spring-like catches (160).

22. Antislip device according to Claims 18 to 21, characterized in that the mounting disk (50) of their wall area (50a) which faces away from the hub (52), within the area of the rim or wheel bolt perforations (51), is fitted with interchangeable adapters constructed in the form of spacing collars (80).

23. Antislip device according to the Claims 18 to 22, characterized in that the rim or wheel bolts (18) for securing the mounting disk (50) are provided with internally threaded bored holes for receiving safety bolts (85).

24. Antislip device according to Claims 18 to 23, characterized in that the length of a locking web (155) of the retaining ring (150) corresponds approximately to the distance between two bead-like shoulders (55) on the hub (52) of the mounting disk (50).

25. Antislip device according to Claims 1 to 24, characterizd in that the antislip device, for mounting the supporting disk (20) is provided with an attachement disk (10) connected to the wheel disk or rim (11), which is connected with lockable mounting means for the supporting disk (20), and in that the mounting disk (50) is permanently connected to the wheel disk or rim (11) and forms a component of the wheel.

FIG.1

FIG. 2

FIG. 3

FIG. 4

FIG.5

FIG.6

FIG.7

FIG. 8

260

261

262

40

A

B

x

20

FIG. 9

40

20

40

FIG. 10

40

A

268

20

B

4

FIG. 11

FIG. 12

FIG.13

FIG.14

FIG. 15

FIG. 16

FIG. 17

FIG. 18

FIG. 19